(19) Europäisches Patentamt
European Patent Office
Office européen des brevets

(11) Veröffentlichungsnummer: **0 437 282 B1**

(12) **EUROPÄISCHE PATENTSCHRIFT**

(45) Veröffentlichungstag der Patentschrift: **05.10.94**

(51) Int. Cl.$^5$: **C09B 23/14**, C09B 23/00, B41M 5/38

(21) Anmeldenummer: **91101567.5**

(22) Anmeldetag: **06.02.91**

Die Akte enthält technische Angaben, die nach dem Eingang der Anmeldung eingereicht wurden und die nicht in dieser Patentschrift enthalten sind.

# (54) Bichromophore Cyanogruppen aufweisende Methinfarbstoffe und ein Verfahren zu ihrer Übertragung.

(30) Priorität: **15.02.90 DE 4004613**

(43) Veröffentlichungstag der Anmeldung: **17.07.91 Patentblatt 91/29**

(45) Bekanntmachung des Hinweises auf die Patenterteilung: **05.10.94 Patentblatt 94/40**

(84) Benannte Vertragsstaaten: **CH DE FR GB IT LI**

(56) Entgegenhaltungen:
**EP-A- 0 284 560**
**EP-A- 0 427 867**
**CH-A- 516 628**
**DE-A- 1 469 691**
**DE-A- 1 569 678**
**GB-A- 1 201 925**
**GB-A- 2 053 950**

(73) Patentinhaber: **BASF Aktiengesellschaft**
**Carl-Bosch-Strasse 38**
**D-67063 Ludwigshafen (DE)**

(72) Erfinder: **Bach, Volker, Dr.**
**Robert-Schuman-Strasse 8**
**W-6730 Neustadt (DE)**
Erfinder: **Etzbach, Karl-Heinz, Dr.**
**Carl-Bosch-Ring 55**
**W-6710 Frankenthal (DE)**
Erfinder: **Sens, Ruediger, Dr.**
**Medicusstrasse 12**
**W-6800 Mannheim 1 (DE)**

EP 0 437 282 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Methinfarbstoffe der Formel I

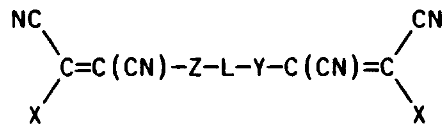 (I),

in der

L für ein Brückenglied, das keine Konjugation von $\pi$-Elektronen zwischen den Resten Z und Y zuläßt,

X gleich oder verschieden ist und jeweils für Cyano, $C_1$-$C_6$-Alkoxycarbonyl oder $C_1$-$C_6$-Monoalkylcarbamoyl, wobei die Alkylgruppen jeweils durch 1 oder 2 Sauerstoffatome unterbrochen sein können, $C_5$-$C_7$-Cycloalkoxycarbonyl, $C_5$-$C_7$-Monocycloalkylcarbamoyl, Phenoxycarbonyl oder Monophenylcarbamoyl und

Z und Y gleich oder verschieden sind und in Verbindung mit dem Brückenglied L unabhängig voneinander jeweils für einen Rest der Formel

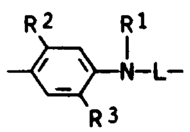 ,

(IIa)

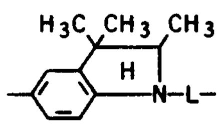 ,

(IIb)

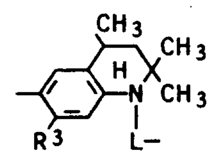 ,

(IIc)

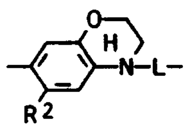 ,

(IId)

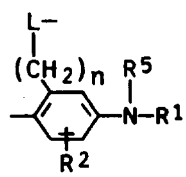 ,

(IIe)

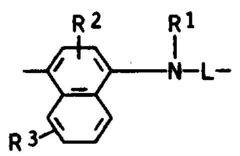 ,

(IIf)

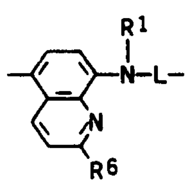 oder

(IIg)

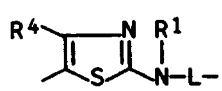

(IIh)

stehen, worin

n gleich 0 oder 1,

$R^1$ und $R^5$ gleich oder verschieden sind und unabhängig voneinander jeweils Alkyl, Alkoxyalkyl, Alkoxycarbonylalkyl oder Alkanoyloxyalkyl, wobei diese Reste jeweils bis zu 10 Kohlenstoffatome aufweisen und gegebenenfalls durch Hydroxy oder Cyano substituiert sein können, Wasserstoff, Benzyl, Cyclohexyl, Phenyl oder Tolyl,

$R^2$ und $R^3$ gleich oder verschieden sind und unabhängig voneinander jeweils Wasserstoff, $C_1$-$C_8$-Alkyl, $C_1$-$C_6$-Alkoxy, $C_1$-$C_6$-Alkanoylamino oder $C_1$-$C_6$-Alkylsulfonylamino,

$R^4$ Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl oder den Rest -$NHR^1$, wobei $R^1$ die obengenannte Bedeutung besitzt, und

$R^6$ Wasserstoff oder $C_1$-$C_8$-Alkyl

bedeuten.

Für die benannten Vertragsstaaten DE, FR und GB gilt die EP-A-427 867 als Stand der Technik gemäß Artikel 54 (3) EPÜ. Demgemäß sind für diese Vertragsstaaten die im Anspruch 1 genannten Verbindungen auszunehmen.

Bichromophore Methinfarbstoffe, die Dicyanovinylreste aufweisen, sind z.B. aus der GB-A-1 201 925, US-A-3 553 245, DE-A-1 569 678, DE-A-2 519 592 oder DE-A-3 020 473 bekannt.

Aufgabe der vorliegenden Erfindung war es nun, neuartige bichromophore Methinfarbstoffe bereitzustellen, die über vorteilhafte anwendungstechnische Eigenschaften verfügen sollten.

Demgemäß wurden die eingangs näher bezeichneten Methinfarbstoffe der Formel I gefunden.

Das Brückenglied L, das keine Konjugation von $\pi$-Elektronen zwischen den Resten Z und Y zuläßt, gehorcht im allgemeinen der Formel

$-E^1-D-E^2-$ ,

worin

D eine chemische Bindung, ein Sauerstoff, $-SO_2-$, -O-CO-O-, 1,4-Cyclohexylen, Phenylen, $-O-CO-(CH_2)_1-CO-O$, $-O-(CH_2)_m-O-$,

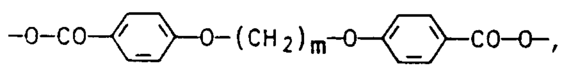

wobei 1 für 1 bis 10 und m für 2 bis 10 stehen,

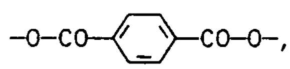, 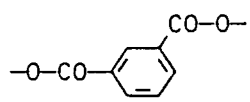 ,

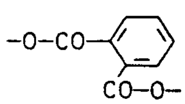 oder 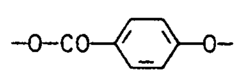

und

$E^1$ und $E^2$ gleich oder verschieden sind und unabhängig voneinander jeweils eine chemische Bindung oder $C_1-C_{15}$-Alkylen bedeuten.

Alle in den obengenannten Formeln auftretenden Alkyl- und Alkylenreste können sowohl geradkettig als auch verzweigt sein.

Geeignete Reste $R^1$, $R^2$, $R^3$, $R^4$, $R^5$ und $R^6$ sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl oder Isooctyl.

Reste $R^1$ und $R^5$ sind weiterhin z.B. Nonyl, Isononyl, Decyl, Isodecyl, 2-Methoxyethyl, 2-Ethoxyethyl, 2-Propoxyethyl, 2-Butoxyethyl, 2-oder 3-Methoxypropyl, 2-oder 3-Ethoxypropyl, 2- oder 3-Propoxypropyl, 2- oder 3-Butoxypropyl, 4-Methoxybutyl, 4-Ethoxybutyl, 4-Butoxybutyl, 2-Cyanoethyl, 3-Cyanopropyl, 4-Cyanobutyl, 2-Hydroxyethyl,

$$-(CH_2)_2-O-\overset{\overset{O}{\|}}{C}-CH_3,\quad -(CH_2)_2-\overset{\overset{O}{\|}}{C}-O-C_4H_9,\quad -(CH_2)_4-\overset{\overset{O}{\|}}{C}-O-CH(CH_3)_2,\quad -(CH_2)_3-\overset{\overset{O}{\|}}{C}-O-C_4H_9$$

Reste $R^4$ sind weiterhin z.B. Phenyl, 2-, 3- oder 4-Methylphenyl, 2- oder 4-Isopropylphenyl, 2-Butylphenyl, 2-, 3- oder 4-Methoxyphenyl, 2-Propoxyphenyl, 4-Butoxyphenyl, 2-(But-2-oxy)phenyl, Benzyl, 2-, 3- oder 4-Methylbenzyl, 2-, 3- oder 4-Methoxybenzyl, Fluor, Chlor, Brom, Thien-2-yl oder Thien-3-yl.

$R^2$ und $R^3$ sind weiterhin Methoxy, Ethoxy, Propoxy, Isopropoxy, Butoxy, Isobutoxy, sec-Butoxy, Pentyloxy, Isopentyloxy, Neopentyloxy, Hexyloxy, Formylamino, Acetylamino, Propionylamino, Butyrylamino, Methylsulfonylamino, Ethylsulfonylamino, Propylsulfonylamino, Isopropylsulfonylamino oder Butylsulfonylamino.

Reste X sind z.B. Methoxycarbonyl, Ethoxycarbonyl, Propoxycarbonyl, Isopropoxycarbonyl, Butoxycarbonyl, 2-Methoxyethoxycarbonyl, Methylcarbamoyl, Ethylcarbamoyl, 2-Methoxyethylcarbamoyl, Cyclopentyloxycarbonyl, Cyclohexyloxycarbonyl, Cycloheptyloxycarbonyl, Cyclopentylcarbamoyl, Cyclohexylcarbamoyl oder Cycloheptylcarbamoyl.

Reste $E^1$ und $E^2$ sind z.B. Methylen, 1,2-Ethylen, Ethyliden, 1,2- oder 1,3-Propylen oder 1,4-, 1,3- oder 2,3-Butylen.

Reste D sind z.B.

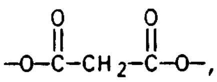, 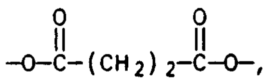, 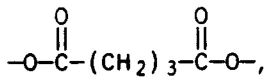, 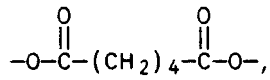,

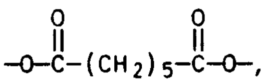, 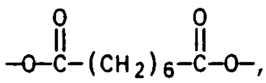, 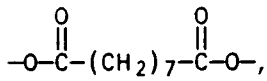,

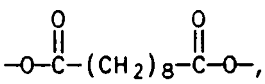, 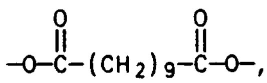, 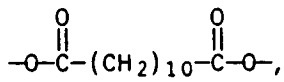,

$-O-(CH_2)_2-O-$, $-O-(CH_2)_3-O-$, $-O-(CH_2)_4-O-$, $-O-(CH_2)_5-O-$, $-O-(CH_2)_6-O-$, $-O-(CH_2)_7-O-$, $-O-(CH_2)_8-O-$, $-O-(CH_2)_9-O-$, $-O-(CH_2)_{10}-O-$,

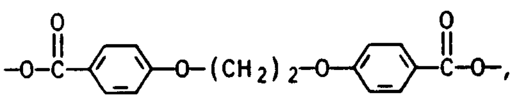, 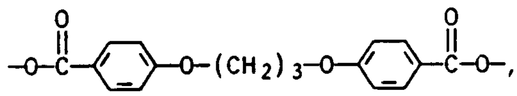,

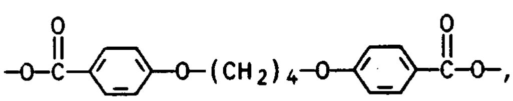, 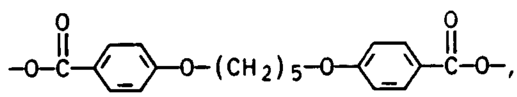,

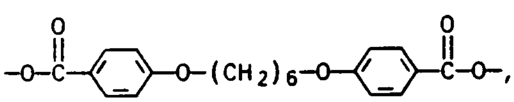, 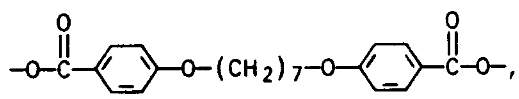,

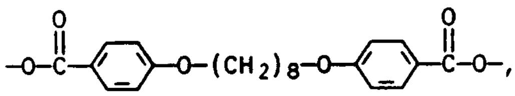, 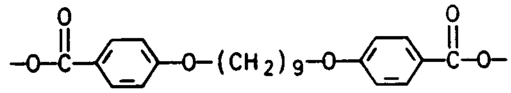

oder 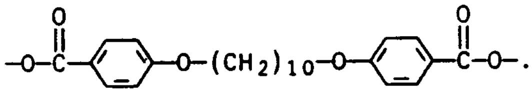.

Bevorzugt sind Methinfarbstoffe der Formel I, worin die Reste Z und Y den Formeln IIa bis IIg gehorchen.

Bevorzugt sind weiterhin Methinfarbstoffe der Formel I, worin

$R^1$ und $R^5$ unabhängig voneinander Wasserstoff, gegebenenfalls durch Cyano oder Acetyl substituiertes $C_1$-$C_6$-Alkyl oder Cyclohexyl,

$R^2$ und $R^3$ unabhängig voneinander Wasserstoff, Methyl, Methoxy oder Acetylamino,

| | |
|---|---|
| $R^4$ | Wasserstoff oder $C_1$-$C_6$-Alkyl, gegebenenfalls durch Methyl oder Methoxy |
| $R^6$ | substituiertes Phenyl, Thien-2-yl oder Thien-3-yl und Wasserstoff oder $C_1$-$C_6$-Alkyl bedeuten. |

Besonders bevorzugt sind Methinfarbstoffe der Formel I, worin das Brückenglied L die Formel

$-E^1-D-E^2-$

aufweist, wobei

| | |
|---|---|
| $E^1$ und $E^2$ | unabhängig voneinander $C_1$-$C_4$-Alkylen und |
| D | eine chemische Bindung, Sauerstoff, $-SO_2-$, $-O-CO-(CH_2)_1-CO-O$, |

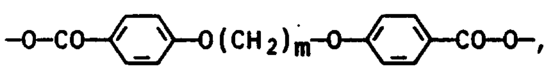

wobei 1 für 2 bis 4 und m für 6 bis 10 stehen,

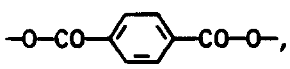
,
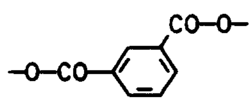

oder

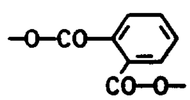

bedeuten.

Besonders bevorzugt sind weiterhin Methinfarbstoffe der Formel I, worin X Cyano bedeutet.

Die erfindungsgemäßen Methinfarbstoffe I können nach an sich bekannten Methoden, wie sie beispielsweise in der GB 1 201 925, US-A-3 553 245, DE-A-1 569 678, DE-A-2 519 592, DE-A-3 020 473, US-A-2 889 335 oder EP-A-284 560 beschrieben sind, erhalten werden.

Eine bevorzugte Verfahrensweise besteht z.B. darin, zuerst die beiden im Farbstoff als Donator wirkenden Gruppen Z und Y mittels eines entsprechenden Brückengliedes miteinander zu verknüpfen und aus den resultierenden Zwischenprodukten (nachfolgend als Farbstoffvorprodukte bezeichnet) anschließend die Methinfarbstoffe I durch den Einbau der Cyanovinylgruppen herzustellen.

Zur näheren Erläuterung sind beispielhaft Syntheseschemata zur Herstellung der Methinfarbstoffe I aufgeführt. Für die Reste Z und Y gilt dabei jeweils die obengenannte Bedeutung.

a) Synthese der Farbstoffvorprodukte

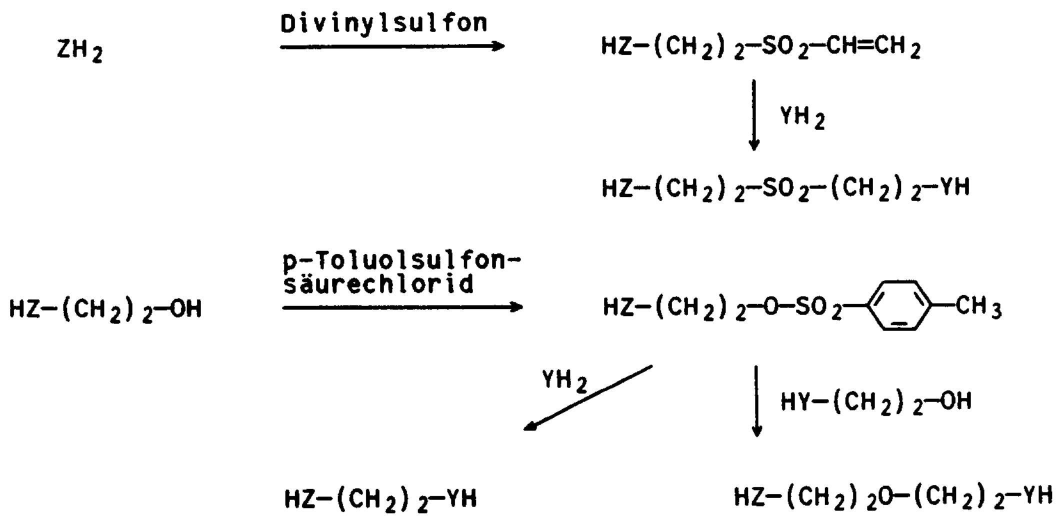


b) Einbau der Cyanovinylgruppe

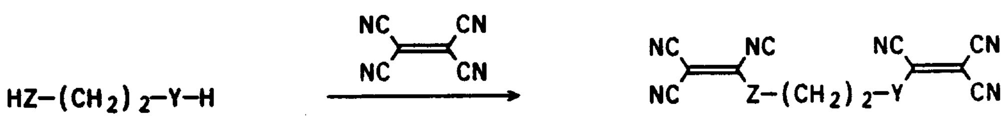

Analog können auch die anderen Farbstoffvorprodukte umgesetzt werden.

Die neuen Farbstoffe I verfügen über eine vorteilhafte Löslichkeit in organischen Lösungsmitteln.

Eine weitere Aufgabe der vorliegenden Erfindung war es, ein neues Verfahren für den thermischen Transfer von Farbstoffen bereitzustellen.

Beim Thermotransferdruckverfahren wird ein Transferblatt, das einen thermisch transferierbaren Farbstoff in einem oder mehreren Bindemitteln, gegebenenfalls zusammen mit geeigneten Hilfsmitteln, auf einem Träger enthält, mit einer Energiequelle, z.B. mit einem Heizkopf, durch kurze Heizimpulse (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zu übertragenden Farbstoffmenge (und damit die Farbabstufung) durch Einstellung der von der Energiequelle abzugebenden Energie leicht möglich ist.

Allgemein wird die Farbaufzeichnung unter Verwendung der drei subtraktiven Grundfarben Gelb, Magenta, Cyan (und gegebenenfalls Schwarz) durchgeführt. Um eine optimale Farbaufzeichnung zu ermöglichen, müssen die Farbstoffe folgende Eigenschaften besitzen:

- leichte thermische Transferierbarkeit,
- geringe Migration innerhalb oder aus der Oberflächenbeschichtung des Aufnahmemediums bei Raumtemperatur,
- hohe thermische und photochemische Stabilität sowie Resistenz gegen Feuchtigkeit und chemische Stoffe,
- für subtraktive Farbmischung die geeigneten Farbtöne aufweisen,
- einen hohen molaren Absorptionskoeffizienten aufweisen,
- bei Lagerung des Transferblattes nicht auskristallisieren.

Diese Forderungen sind erfahrungsgemäß gleichzeitig sehr schwierig zu erfüllen.

Daher entsprechen die meisten der bekannten, für den thermischen Transferdruck verwendeten Farbstoffe nicht dem geforderten Anforderungsprofil.

Es wurde nun gefunden, daß die Übertragung von bichromophoren Methinfarbstoffen von einem Träger auf ein mit Kunststoff beschichtetes Papier mit Hilfe einer Energiequelle vorteilhaft gelingt, wenn man einen Träger verwendet, auf dem sich ein oder mehrere Farbstoffe der Formel I

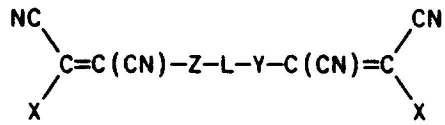

(I)

befinden, in der

L für ein Brückenglied, das keine Konjugation von $\pi$-Elektronen zwischen den Resten Z und Y zuläßt,

X gleich oder verschieden ist und jeweils für Cyano, $C_1$-$C_6$-Alkoxycarbonyl oder $C_1$-$C_6$-Monoalkylcarbamoyl, wobei die Alkylgruppen jeweils durch 1 oder 2 Sauerstoffatome unterbrochen sein können, $C_5$-$C_7$-Cycloalkoxycarbonyl, $C_5$-$C_7$-Monocycloalkylcarbamoyl, Phenoxycarbonyl oder Monophenylcarbamoyl und

Z und Y gleich oder verschieden sind und in Verbindung mit dem Brückenglied L unabhängig voneinander jeweils für einen Rest der Formel

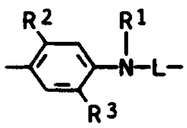 ,

(IIa)

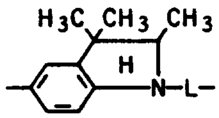 ,

(IIb)

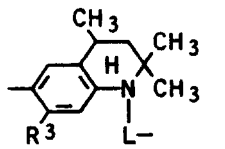 ,

(IIc)

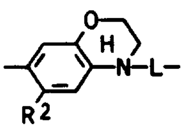 ,

(IId)

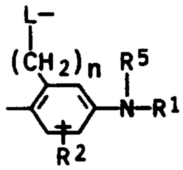 ,

(IIe)

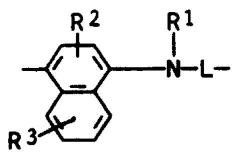 ,

(IIf)

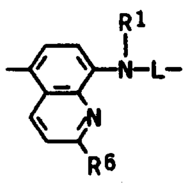 oder

(IIg)

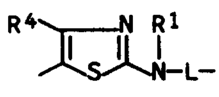

(IIh)

stehen, worin

n gleich 0 oder 1,

$R^1$ und $R^5$ gleich oder verschieden sind und unabhängig voneinander jeweils Alkyl, Alkoxyalkyl, Alkoxycarbonylalkyl oder Alkanoyloxyalkyl, wobei diese Reste jeweils bis zu 10 Kohlenstoffatome aufweisen und gegebenenfalls durch Hydroxy oder Cyano substituiert sein können, Wasserstoff, Benzyl, Cyclohexyl, Phenyl oder Tolyl,

$R^2$ und $R^3$ gleich oder verschieden sind und unabhängig voneinander jeweils $C_1$-$C_8$-Alkyl, $C_1$-$C_6$-Alkoxy, $C_1$-$C_6$-Alkanoylamino oder $C_1$-$C_6$-Alkylsulfonylamino,

$R^4$ Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl oder den Rest -$NHR^1$, wobei $R^1$ die obengenannte Bedeutung besitzt, und

$R^6$ Wasserstoff oder $C_1$-$C_8$-Alkyl

bedeuten.

Für die benannten Vertragsstaaten DE, FR und GB gilt die EP-A-427 867 als Stand der Technik gemäß Artikel 54 (3) EPÜ. Demgemäß sind für diese Vertragsstaaten die im Anspruch 1 genannten Verbindungen auszunehmen.

Im Vergleich zu den bei den bekannten Verfahren verwendeten Farbstoffen zeichnen sich die beim erfindungsgemäßen Verfahren übertragenen Farbstoffe im allgemeinen durch verbesserte Fixierung im Aufnahmemedium bei Raumtemperatur, leichtere thermische Transferierbarkeit, höhere Lichtechtheit, höhere Stabilität gegenüber Feuchtigkeit und chemischen Stoffen, bessere Löslichkeit in organischen Lösungsmitteln, höhere Farbbandstabilität und höhere Farbtonreinheit aus.

Weiterhin ist überraschend, daß die Farbstoffe der Formel I gut transferierbar sind und hohe Farbbandstabilität aufweisen, obwohl sie ein sehr hohes Molekulargewicht aufweisen.

In den bisher bekannten Thermotransferdruck-Systemen werden Mischungen monochromophorer Farbstoffe eingesetzt, um im Cyan- und besonders im Magentabereich jeweils ca. ein Drittel des einfallenden weißen Lichtes zu absorbieren. Dabei tritt das Problem auf, daß die eingesetzten Farbstoffe exakt gleiches Transferverhalten zeigen müssen, damit bei einer vorgegebenen Leistung des Thermokopfes gleiche Anfärbungen des Acceptors erreicht werden. Beim erfindungsgemäßen Verfahren treten diese Nachteile nicht mehr auf. Daraus resultiert z.B. bei der Verwendung von Trichromie-systemen ein verbesserter schwarzer Druck.

Aufgrund ihrer hohen molaren Extinktionskoeffizienten und ihrer hohen Brillanz sind die im neuen Verfaren angewandten Farbstoffe der Formel I für die Herstellung eines, für die subtraktive Farbmischung erforderlichen, Trichromiesystems vorteilhaft geeignet.

Zusätzlich erlaubt die gute Transferierbarkeit eine große Variation der als Nehmer verwendeten Kunststoffe und somit eine sehr gute Anpassung der Farbstoffe in das Gesamtsystem (Geber/Nehmer).

Zur Herstellung der für das erfindungsgemäße Verfahren benötigten Farbstoffträger werden die Farbstoffe in einem geeigneten organischen Lösungsmittel oder in Mischungen von Lösungsmitteln mit einem oder mehreren Bindemitteln, gegebenenfalls unter Zugabe von Hilfsmitteln, zu einer Druckfarbe verarbeitet. Diese enthält den Farbstoff vorzugsweise in molekular-dispers gelöster Form. Die Druckfarbe kann mittels einer Rakel auf den inerten Träger aufgetragen und die Färbung an der Luft getrocknet werden.

Geeignete organische Lösungsmittel für die Farbstoffe I sind z.B. solche, in denen die Löslichkeit der Farbstoffe I bei einer Temperatur von 20 °C größer als 1 Gew.%, vorzugsweise größer als 5 Gew.% ist.

Beispielhaft seien Ethanol, Propanol, Isobutanol, Tetrahydrofuran, Methylenchlorid, Methylethylketon, Cyclopentanon, Cyclohexanon, Toluol, Chlorbenzol oder deren Mischungen genannt.

Als Bindemittel kommen alle Resins oder Polymermaterialien in Betracht, welche in organischen Lösungsmitteln löslich sind und den Farbstoff an den inerten Träger abriebfest zu binden vermögen. Dabei werden solche Bindemittel bevorzugt, welche den Farbstoff nach Trocknung der Druckfarbe an der Luft in Form eines klaren, transparenten Films aufnehmen, ohne daß dabei eine sichtbare Auskristallisation des Farbstoffes auftritt.

Beispiele für solche Bindemittel sind Cellulosederivate, z.B. Methylcellulose, Ethylcellulose, Ethylhydroxyethylcellulose, Hydroxypropylcellulose, Celluloseacetat oder Celluloseacetobutyrat, Stärke, Alginate, Alkydresins, Vinylresins, Polyvinylalkohol, Polyvinylacetat, Polyvinylbutyrat oder Polyvinylpyrrolidone. Weiterhin kommen Polymere und Copolymere von Acrylaten oder deren Derivate, wie Polyacrylsäure, Polymethylmethacrylat oder Styrolacrylatcopolymere, Polyesterresins, Polyamidresins, Polyurethanresins oder natürliche CH-Resins, wie Gummi Arabicum, als Bindemittel in Betracht. Weitere geeignete Bindemittel sind z.B. in der DE-A-3 524 519 beschrieben.

Bevorzugte Bindemittel sind Ethylcellulose, Ethylhydroxyethylcellulose, Polyvinylbutyrat oder Polyvinylacetat.

Das Gewichtsverhältnis Bindemittel:Farbstoff beträgt im allgemeinen 1:1 bis 10:1.

Als Hilfsmittel kommen z.B. Trennmittel in Betracht, wie sie in der EP-A-227 092, EP-A-192 435 oder den dort zitierten Patentanmeldungen genannt sind. Darüber hinaus sind besonders organische Additive zu nennen, welche das Auskristallisieren der Transferfarbstoffe bei Lagerung und beim Erhitzen des Farbbandes verhindern, z.B. Cholesterin oder Vanillin.

Inerte Träger sind z.B. Seiden-, Lösch- oder Pergaminpapier oder Kunststoffolien mit guter Wärmebeständigkeit, z.B. gegebenenfalls metallbeschichteter Polyester, Polyamid oder Polyimid. Der inerte Träger wird auf der dem Thermokopf zugewandten Seite gegebenenfalls zusätzlich mit einer Gleitmittelschicht (Slipping layer) beschichtet, um ein Verkleben des Thermokopfes mit dem Trägermaterial zu verhindern. Geeignete Gleitmittel werden z.B. in der EP-A-216 483 oder EP-A-227 095 beschrieben. Die Dicke des Farbstoff-Trägers beträgt im allgemeinen 3 bis 30 µm, vorzugsweise 5 bis 10 µm.

Als Farbstoffnehmerschicht kommen prinzipiell alle temperaturstabilen Kunststoffschichten mit Affinität zu den zu transferierenden Farbstoffen in Betracht, z.B. modifizierte Polycarbonate oder Polyester. Geeignete Rezepturen für die Nehmerschlchtzusammensetzung werden z.B. in der EP-A-227 094, EP-A-133 012, EP-A-133 011, EP-A-111 004, JP-A-199 997/1986, JP-A-283 595/1986, JP-A-237 694/1986 oder JP-A-127 392/1986 ausführlich beschrieben.

Die Übertragung erfolgt mittels einer Energiequelle, z.B. mittels eines Lasers oder mittels eines Thermokopfes, der auf eine Temperatur von ≧ 300 °C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Die erfindungsgemäßen Farbstoffe eignen sich weiterhin vorteilhaft zum Färben von synthetischen Materialien, z.B. von Polyestern, Polyamiden oder Polycarbonaten.

Die folgenden Beispiele sollen die Erfindung näher erläutern. Angaben über Prozente beziehen sich, sofern nicht anders vermerkt, auf das Gewicht.

Herstellung der Methinfarbstoffe

Beispiel A

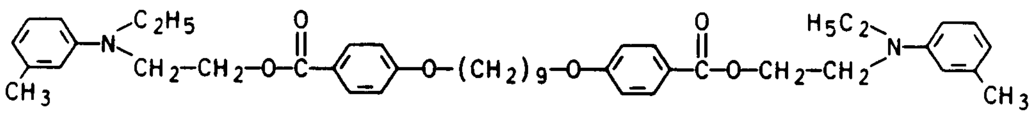

50 g 1,9-Dibromnonan, 58,1 g 4-Hydroxybenzoesäureethylester, 94,2 g Kaliumcarbonat wurden bei Raumtemperatur in 500 ml N,N-Dimethylformamid (wasserfrei) verrührt und anschließend solange auf 100 °C erhitzt bis dünnschichtchromatographisch kein Ausgangsmaterial mehr nachweisbar war. Das abgekühlte Reaktionsgemisch wurde abgesaugt und das Lösungsmittel unter vermindertem Druck entfernt. Der Rückstand wurde aus Methanol umkristallisiert (37,4 g Reinsubstanz), mit 300 ml Ethanol versetzt, zu einer Mischung aus 19,9 g Kaliumhydroxid in 260 ml Ethanol gegeben und auf Rückflußtemperatur gebracht. Nach vollständiger Verseifung (DC-Kontrolle) wurde auf Raumtemperatur abgekühlt, abgesaugt, der Rückstand in Wasser verrührt, mit Salzsäure angesäuert, erneut abgesaugt und neutral gewaschen. Man erhielt 28,3 g Reinsubstanz.
$^1$H-NMR ($CDCl_3$, TMS): $\delta$ = 1,10 bis 1,90 (m, 14 H, $CH_2$), 4,05 (t, 4 H, $OCH_2$), 7,00 (d, 4 H, Aromat-H), 7,90 (d, 4 H, Aromat-H), 12,15 (s, 2 H, COOH) ppm
28 g des erhaltenen Produkts wurden in 120 ml Thionylchlorid verrührt und unter Erwärmen auf Rückflußtemperatur gelöst. Nach vollständiger Umsetzung wurde die Lösung auf Raumtemperatur abgekühlt, das Reaktionsprodukt mit Petrolether gefällt, der Niederschlag abgesaugt, mit Petrolether nachgewaschen (IR: COCl, 1760 bis 1740 $cm^{-1}$) und danach in 50 ml Methylenchlorid gelöst. Diese Lösung wurde zu 22,9 g N-(2-Hydroxyethyl)-N-ethyl-3-methylanilin, einer Spatelspitze 4-Dimethylaminopyridin und 6,5 g Triethylamin in 50 ml wasserfreiem Methylenchlorid bei einer Temperatur von 0 bis 5 °C getropft. Danach wurde bei Raumtemperatur bis zur vollständigen Umsetzung weiter gerührt. Das Reaktionsgemisch wurde in Eiswasser eingerührt, mit verdünnter Salzsäure angesäuert und mit Methylenchlorid extrahiert. Die organische Phase wurde mit Wasser neutral gewaschen, getrocknet und das Lösungsmittel unter vermindertem Druck entfernt (Ausbeute: 42 g, $R_f$-Wert: 0,32 Toluol/Essigester 5:1 v/v - DC-Alufolien, Kieselgel 60 $F_{254}$ der Fa. E. Merck).

Beispiel B

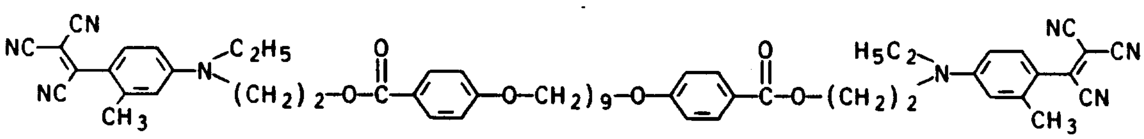

7,2 g der Verbindung aus Beispiel A wurden in 20 ml wasserfreiem N,N-Dimethylformamid gelöst und innerhalb 10 Minuten portionsweise 2,6 g Tetracyanoethylen unter Rühren zugegeben. Nach vollständiger Zugabe wurde 15 Minuten auf 55 bis 60 °C erwärmt, danach auf Raumtemperatur abgekühlt und die Mischung in 100 ml Eiswasser eingerührt. Der sich als Öl abscheidende Farbstoff wurde abgetrennt, mit Wasser, 20 gew.%iger Natriumsulfitlösung und nochmals mit Wasser gewaschen, trockengesaugt und in 250 ml Aceton aufgenommen. Nach Filtration wurde das Lösungsmittel unter vermindertem Druck entfernt

und das Zielprodukt chromatographisch gereinigt (Kieselgel/Toluol/Essigester).
Ausbeute: 7,8 g
$\lambda_{max}$ ($CH_2Cl_2$): 539 nm
$R_f$-Wert (Toluol/Essigester 5:1 v/v): 0,26
IR (Film): $\delta$ = 3050, 3000, 2960, 2240, 1700 $cm^{-1}$.

In analoger Weise wurden die folgenden Verbindungen C und D erhalten.

Beispiel C:

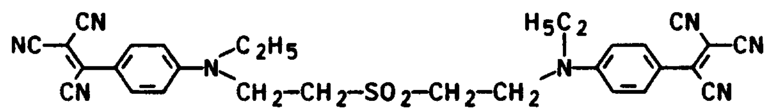

$\lambda_{max}$ ($CH_2Cl_2$): 502 nm
$R_f$-Wert (Essigester): 0,52,

Beispiel D:

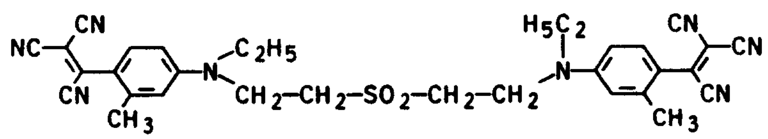

$\lambda_{max}$ ($CH_2Cl_2$): 526 nm
$R_f$-Wert (Toluol/Essigester 5:1 v/v): 0,22.

Transfer der Methinfarbstoffe

Um das Transferverhalten der Farbstoffe quantitativ und in einfacher Weise prüfen zu können, wurde der Thermotransfer mit großflächigen Heizbacken statt eines Thermokopfes durchgeführt, wobei die Transfertemperatur im Bereich 70 °C < T < 120 °C variiert und die Transferzeit auf 2 Minuten festgelegt wurde.

α) Allgemeines Rezept für die Beschichtung der Träger mit Farbstoff:

1 g Bindemittel wurden in 8 ml Toluol/Ethanol (8:2 v/v) bei 40 bis 50 °C gelöst. Dazu wurde eine Lösung aus 0,25 g Farbstoff in 5 ml Tetrahydrofuran eingerührt und gegebenenfalls von unlöslichem Rückstand abfiltriert. Die so erhaltene Druckpaste wurde mit einer 80 µm Rakel auf eine Polyesterfolie (Dicke: 6 bis 10 µm) abgezogen und mit einem Fön getrocknet.

β) Prüfung auf thermische Transferierbarkeit

Die verwendeten Farbstoffe wurden in der folgenden Weise geprüft:

Die den zu prüfenden Farbstoff in der Beschichtungsmasse (Vorderseite) enthaltende Polyesterfolie (Geber) wurde mit der Vorderseite auf kommerziell erhältliches (unten näher bezeichnetes) Papier (Nehmer) gelegt und aufgedrückt. Geber/Nehmer wurden dann mit Aluminiumfolie umwickelt und zwischen zwei beheizten Platten bei verschiedener Temperatur T (im Temperaturintervall 70 °C < T < 120 °C) erhitzt. Die in die glänzende Kunststoffschicht des Nehmers diffundierte Farbstoffmenge ist proportional der optischen Dichte (= Extinktion A). Letztere wurde photometrisch bestimmt. Trägt man den Logarithmus der im Temperaturintervall zwischen 80 und 110 °C gemessenen Extinktion A der angefärbten Nehmerpapiere gegen die zugehörige reziproke absolute Temperatur auf, so erhält man Geraden, aus deren Steigung die Aktivierungsenergie $\Delta E_T$ für das Transferexperiment berechnet wird:

$$\Delta E_T = 2{,}3 \cdot R \cdot \frac{\Delta \log A}{\Delta\left[\frac{1}{T}\right]}$$

Zur vollständigen Charakterisierung wurde aus den Auftragungen zusätzlich die Temperatur T* [°C] entnommen, bei der die Extinktion A der angefärbten Nehmerpapiere den Wert 1 erreicht.

Die in den folgenden Tabellen aufgeführten Farbstoffe wurden nach α) verarbeitet und die erhaltenen, mit Farbstoff beschichteten Träger nach β) auf das Transferverhalten geprüft. In den Tabellen sind jeweils die Thermotransferparameter T* und $\Delta E_T$, die Absorptionsmaxima der Farbstoffe $\lambda_{max}$ (gemessen in Methylenchlorid), die verwendeten Bindemittel sowie das Gewichtsverhältnis Farbstoff:Bindemittel:Hilfsmittel aufgeführt.

Dabei gelten folgende Abkürzungen:

| | |
|---|---|
| F | = Farbstoff |
| B | = Bindemittel |
| EC | = Ethylcellulose |
| HCVPP | = Hitachi Color Video Print Paper (Nehmer) |
| VY-C | = Hitachi Color Video Print Paper (Nehmer) |
| PBTP | = Polybutylenterephthalat-Folie (Nehmer) |
| SV 100 | = Kodak Color Video Print Paper (Nehmer) |

Tabelle 1

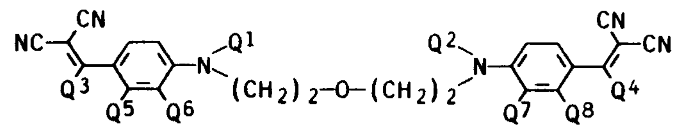

| Bsp. Nr. | $Q^1$ | $Q^2$ | $Q^3$ | $Q^4$ | $Q^5$ | $Q^6$ | $Q^7$ | $Q^8$ | $\lambda_{max}$ [nm] | B | F : B | Nehmer | T* [°C] | $\Delta E_T$ [kJ/mol] |
|---|---|---|---|---|---|---|---|---|---|---|---|---|---|---|
| 1 | $C_2H_5$ | $C_2H_5$ | CN | CN | H | H | H | H | 524 | EC | 1 : 4 | HCVPP | 60 | 66 |
| 2 | $C_2H_5$ | $C_2H_5$ | CN | CN | H | H | H | H | 524 | EC | 1 : 4 | PBTP | 79 | 105 |
| 3 | H | $C_2H_5$ | CN | CN | H | H | H | H | 523 | EC | 1 : 4 | HCVPP | 38 | 43 |
| 4 | H | $C_2H_5$ | CN | CN | H | H | H | H | 523 | EC | 1 : 4 | PBTP | 78 | 65 |
| 5 | $C_2H_5$ | $C_2H_5$ | CN | CN | $CH_3$ | H | H | $CH_3$ | 555 | EC | 1 : 4 | SV 100 | 83 | 92 |
| 6 | $C_2H_5$ | $C_2H_5$ | CN | CN | $CH_3$ | H | H | $CH_3$ | 555 | EC | 1 : 4 | PBTP | 114 | 58 |
| 7 | $C_2H_5$ | $C_2H_5$ | CN | CN | H | H | H | H | 524 | EC | 1 : 2 | VY-C | 108 | 85 |

Tabelle 2

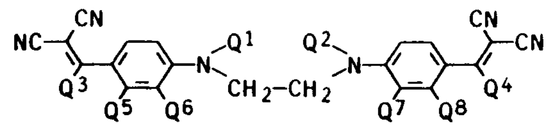

| Bsp. Nr. | $Q^1$ | $Q^2$ | $Q^3$ | $Q^4$ | $Q^5$ | $Q^6$ | $Q^7$ | $Q^8$ | $\lambda_{max}$ [nm] | B | F : B | Nehmer | T* [°C] | $\Delta E_T$ [kJ/mol] |
|---|---|---|---|---|---|---|---|---|---|---|---|---|---|---|
| 8 | $C_2H_5$ | $C_2H_5$ | CN | CN | H | H | H | H | 523 | EC | 1 : 4 | HCVPP | 56 | 55 |
| 9 | $C_2H_5$ | $C_2H_5$ | CN | CN | H | H | H | H | 523 | EC | 1 : 4 | PBTP | 83 | 64 |
| 10 | $C_2H_5$ | 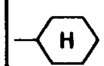 | CN | CN | H | H | $OCH_3$ | H | 531 | EC | 1 : 4 | HCVPP | 78 | 84 |
| 11 | $C_2H_5$ | 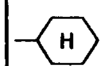 | CN | CN | H | H | $OCH_3$ | H | 531 | EC | 1 : 4 | SV 100 | 85 | 225 |
| 12 | $C_2H_5$ | 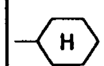 | CN | CN | H | H | $OCH_3$ | H | 531 | EC | 1 : 4 | PBTP | 104 | 85 |
| 13 | $C_2H_5$ | $C_2H_5$ | CN | CN | 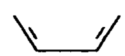 | | H | H | 528 | EC | 1 : 4 | HCVPP | 84 | 75 |
| 14 | $C_2H_5$ | $C_2H_5$ | CN | CN | 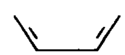 | | H | H | 528 | EC | 1 : 4 | PBTP | 127 | 40 |

Tabelle 3

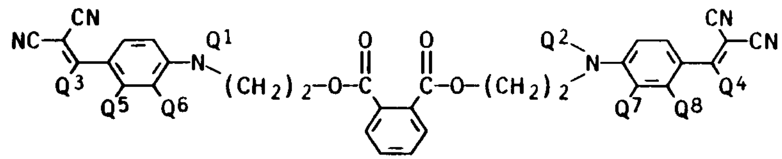

| Bsp. Nr. | $Q^1$ | $Q^2$ | $Q^3$ | $Q^4$ | $Q^5$ | $Q^6$ | $Q^7$ | $Q^8$ | $\lambda_{max}$ [nm] | B | F : B | Nehmer | T* [°C] | $\Delta E_T$ [kJ/mol] |
|---|---|---|---|---|---|---|---|---|---|---|---|---|---|---|
| 15 | $C_2H_5$ | $C_2H_5$ | CN | CN | H | H | H | H | 514 | EC | 1 : 4 | HCVPP | 85 | 22 |
| 16 | $C_2H_5$ | $C_2H_5$ | CN | CN | H | H | H | H | 514 | EC | 1 : 4 | PBTP | 132 | 31 |
| 17 | $C_2H_5$ | $C_2H_5$ | CN | CN | H | H | H | H | 514 | EC | 1 : 4 | SV 100 | 87 | 67 |
| 18 | $C_2H_5$ | $C_2H_5$ | CN | CN | $CH_3$ | H | H | $CH_3$ | 536 | EC | 1 : 4 | HCVPP | 95 | 47 |
| 19 | $C_2H_5$ | $C_2H_5$ | CN | CN | $CH_3$ | H | H | $CH_3$ | 536 | EC | 1 : 4 | PBTP | 170 | 26 |
| 20 | $C_2H_5$ | $C_2H_5$ | CN | CN | $CH_3$ | H | H | $CH_3$ | 536 | EC | 1 : 2 | SV 100 | 89 | 151 |
| 21 | $C_2H_5$ | $C_2H_5$ | CN | CN | $CH_3$ | H | H | $CH_3$ | 536 | PVB | 1 : 2 | PBTP | 126 | 77 |

Tabelle 4

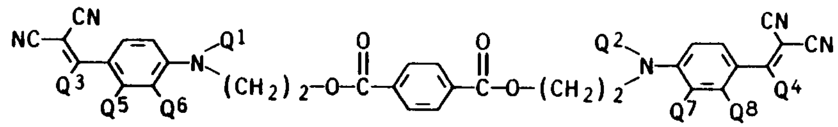

| Bsp. Nr. | $Q^1$ | $Q^2$ | $Q^3$ | $Q^4$ | $Q^5$ | $Q^6$ | $Q^7$ | $Q^8$ | $\lambda_{max}$ [nm] | B | F : B | Nehmer | T* [°C] | $\Delta E_T$ [kJ/mol] |
|---|---|---|---|---|---|---|---|---|---|---|---|---|---|---|
| 22 | $C_2H_5$ | $C_2H_5$ | CN | CN | H | H | H | H | 513 | EC | 1 : 4 | HCVPP | 79 | 83 |
| 23 | $C_2H_5$ | $C_2H_5$ | CN | CN | H | H | H | H | 513 | EC | 1 : 4 | PBTP | 137 | 37 |
| 24 | $C_2H_5$ | $C_2H_5$ | CN | CN | H | H | H | H | 513 | EC | 1 : 4 | SV 100 | 88 | 66 |
| 25 | $C_2H_5$ | $C_2H_5$ | CN | CN | $CH_3$ | H | H | $CH_3$ | 535 | EC | 1 : 4 | SV 100 | 101 | 83 |
| 26 | $C_2H_5$ | $C_2H_5$ | CN | CN | $CH_3$ | H | H | $CH_3$ | 535 | EC | 1 : 4 | PBTP | 135 | 60 |

Tabelle 5

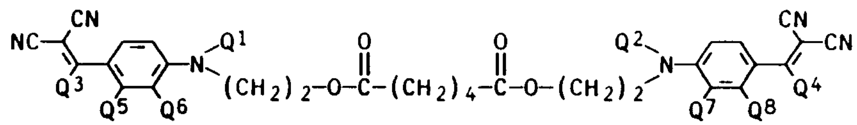

| Bsp. Nr. | $Q^1$ | $Q^2$ | $Q^3$ | $Q^4$ | $Q^5$ | $Q^6$ | $Q^7$ | $Q^8$ | $\lambda_{max}$ [nm] | B | F : B | Nehmer | T* [°C] | $\Delta E_T$ [kJ/mol] |
|---|---|---|---|---|---|---|---|---|---|---|---|---|---|---|
| 27 | $C_2H_5$ | $C_2H_5$ | CN | CN | H | H | H | H | 515 | EC | 1 : 4 | HCVPP | 73 | 32 |
| 28 | $C_2H_5$ | $C_2H_5$ | CN | CN | H | H | H | H | 515 | EC | 1 : 4 | PBTP | 117 | 49 |
| 29 | $C_2H_5$ | $C_2H_5$ | CN | CN | H | H | H | H | 515 | EC | 1 : 4 | SV 100 | 83 | 90 |
| 30 | $C_2H_5$ | $C_2H_5$ | CN | CN | $CH_3$ | H | H | $CH_3$ | 538 | EC | 1 : 4 | SV 100 | 88 | 106 |

Tabelle 6

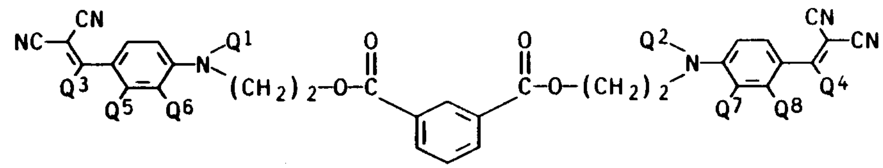

| Bsp. Nr. | $Q^1$ | $Q^2$ | $Q^3$ | $Q^4$ | $Q^5$ | $Q^6$ | $Q^7$ | $Q^8$ | $\lambda_{max}$ [nm] | B | F : B | Nehmer | T* [°C] | $\Delta E_T$ [kJ/mol] |
|---|---|---|---|---|---|---|---|---|---|---|---|---|---|---|
| 31 | $C_2H_5$ | $C_2H_5$ | CN | CN | H | H | H | H | 513 | EC | 1 : 4 | HCVPP | 83 | 69 |
| 32 | $C_2H_5$ | $C_2H_5$ | CN | CN | H | H | H | H | 513 | EC | 1 : 4 | PBTP | 142 | 25 |
| 33 | $C_2H_5$ | $C_2H_5$ | CN | CN | H | H | H | H | 513 | EC | 1 : 4 | SV 100 | 90 | 71 |
| 34 | $C_2H_5$ | $C_2H_5$ | CN | CN | $CH_3$ | H | H | $CH_3$ | 536 | EC | 1 : 4 | SV 100 | 98 | 108 |

Tabelle 7

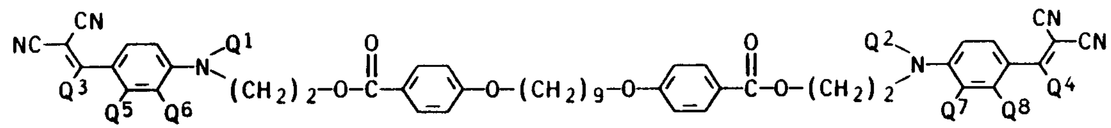

| Bsp. Nr. | $Q^1$ | $Q^2$ | $Q^3$ | $Q^4$ | $Q^5$ | $Q^6$ | $Q^7$ | $Q^8$ | $\lambda_{max}$ [nm] | B | F : B | Nehmer | T* [°C] | $\Delta E_T$ [kJ/mol] |
|---|---|---|---|---|---|---|---|---|---|---|---|---|---|---|
| 35 | $C_2H_5$ | $C_2H_5$ | CN | CN | $CH_3$ | H | H | $CH_3$ | 539 | EC | 1 : 4 | PBTP | 158 | 71 |
| 36 | $C_2H_5$ | $C_2H_5$ | CN | CN | $CH_3$ | H | H | $CH_3$ | 539 | EC | 1 : 4 | HCVPP | 119 | 38 |
| 37 | $C_2H_5$ | $C_2H_5$ | CN | CN | H | H | H | H | 517 | EC | 1 : 4 | SV 100 | 103 | 133 |

Tabelle 8

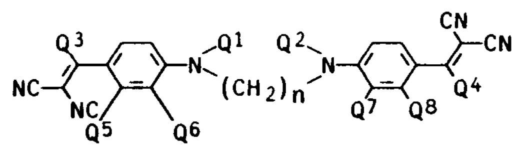

| Bsp. Nr. | $Q^1$ | $Q^2$ | $Q^3$ | $Q^4$ | $Q^5$ | $Q^6$ | $Q^7$ | $Q^8$ | n | $\lambda_{max}$ [nm] | B | F : B | Nehmer | T* [°C] | $\Delta E_T$ [kJ/mol] |
|---|---|---|---|---|---|---|---|---|---|---|---|---|---|---|---|
| 38 | $C_4H_9$ | $C_4H_9$ | CN | CN | H | H | H | H | 4 | 527 | EC | 1 : 4 | HCVPP | < 70 | 48 |
| 39 | $C_4H_9$ | $C_4H_9$ | CN | CN | H | H | H | H | 6 | 529 | - | - | - | - | - |

Tabelle 9

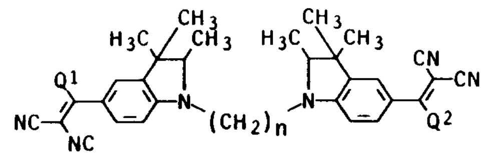

| Bsp. Nr. | $Q^1$ | $Q^2$ | n | $\lambda_{max}$ [nm] | B | F : B | Nehmer | T* [°C] | $\Delta E_T$ [kJ/mol] |
|---|---|---|---|---|---|---|---|---|---|
| 40 | CN | CN | 6 | 544 | - | - | - | - | - |

Tabelle 10

| Bsp. Nr. | Formel | $\lambda_{max}$ [nm] | B | F : B | Nehmer | T* [°C] | $\Delta E_T$ [kJ/mol] |
|---|---|---|---|---|---|---|---|
| 41 | 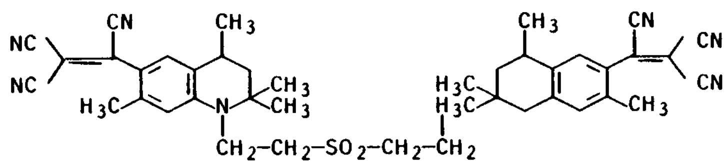 | 542 | EC | 1 : 2 | HCVPP | 112 | 62 |
| 42 | 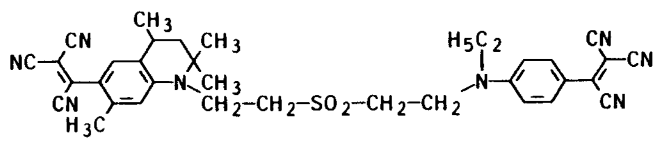 | 530 | EC | 1 : 2 | HCVPP | 92 | 19 |
| 43 | 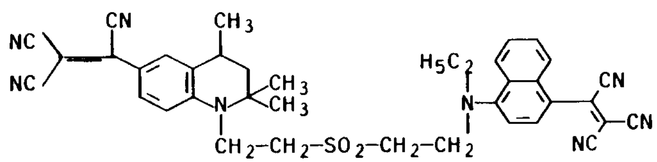 | 549 | EC | 1 : 2 | HCVPP | 97 | 45 |

In analoger Weise können die folgenden Methinfarbstoffe übertragen werden.

Bsp.Nr.

44

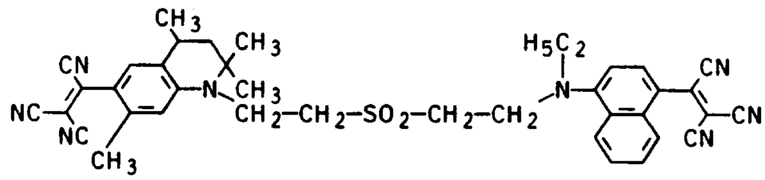

45

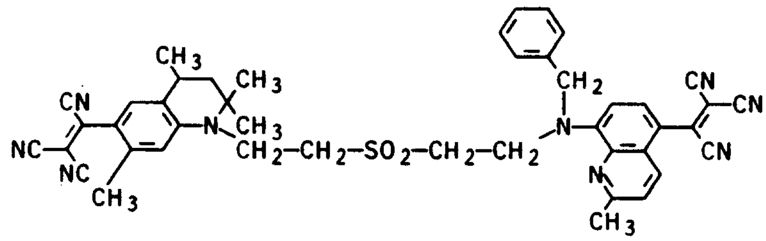

46

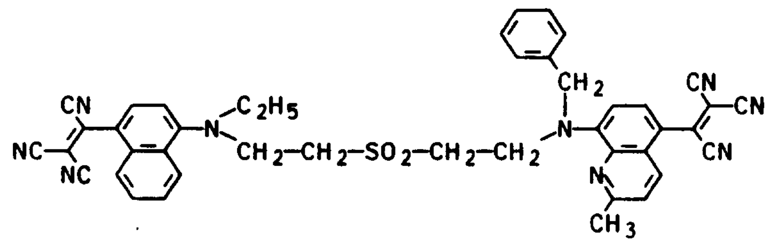

47

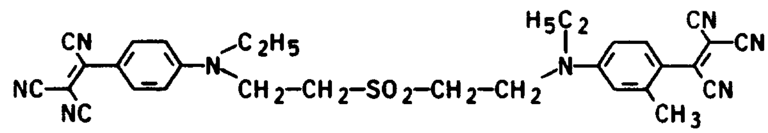

48

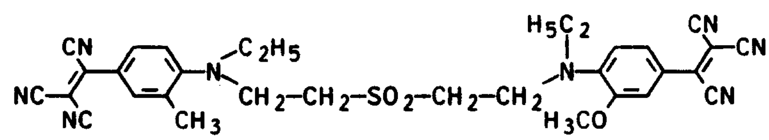

Bsp.Nr.

49

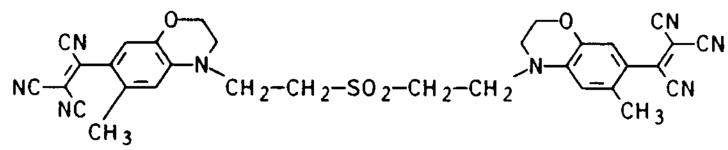

50

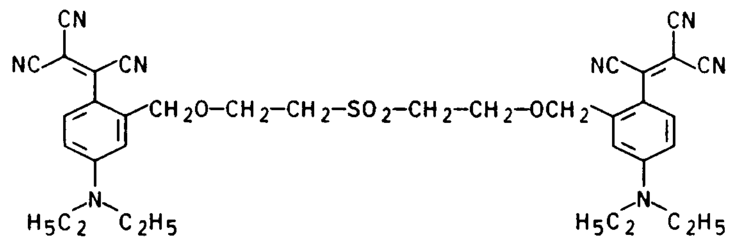

51

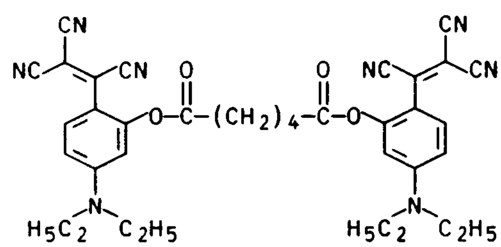

52

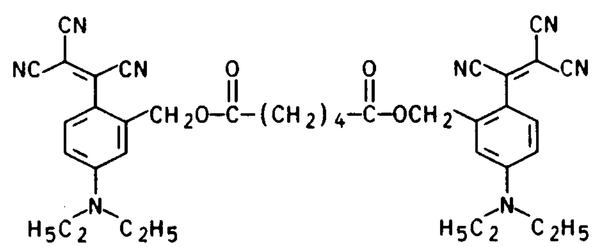

53

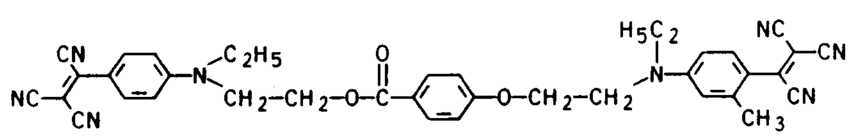

54

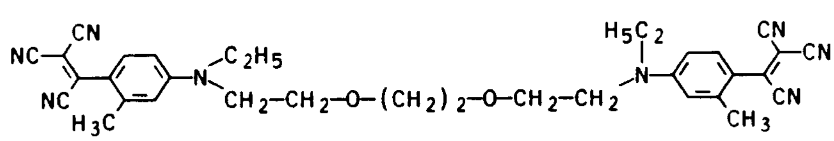

55

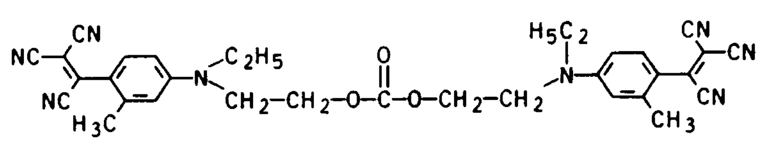

Bsp.Nr.

56 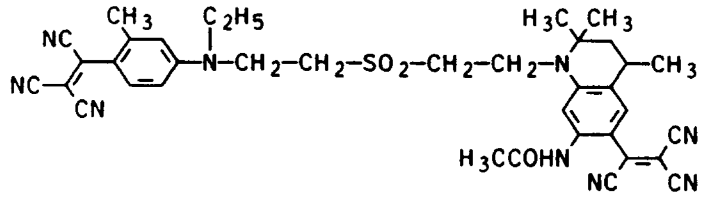

57 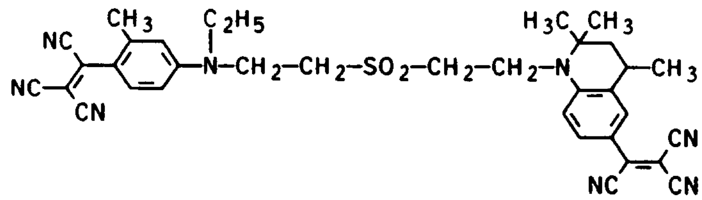

58 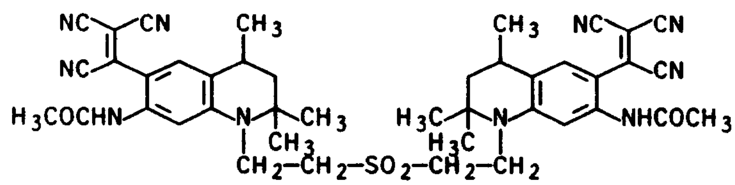

59 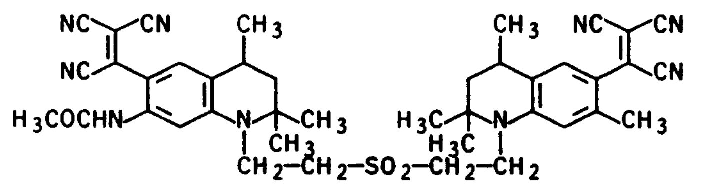

60 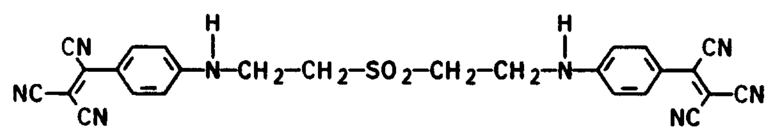

61 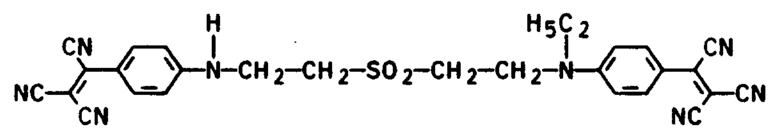

62 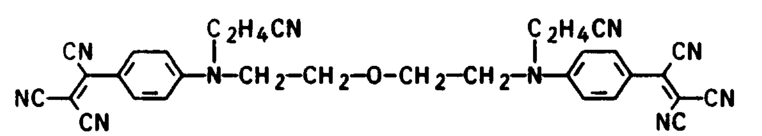

## Patentansprüche

### Patentansprüche für folgende Vertragsstaaten : CH, IT, LI

1. Methinfarbstoffe der Formel I

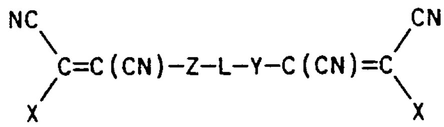

(I),

in der

L für ein Brückenglied, das keine Konjugation von $\pi$-Elektronen zwischen den Resten Z und Y zuläßt,

X gleich oder verschieden ist und jeweils für Cyano, $C_1$-$C_6$-Alkoxycarbonyl oder $C_1$-$C_6$-Monoalkylcarbamoyl, wobei die Alkylgruppen jeweils durch 1 oder 2 Sauerstoffatome unterbrochen sein können, $C_5$-$C_7$-Cycloalkoxycarbonyl, $C_5$-$C_7$-Monocycloalkylcarbamoyl, Phenoxycarbonyl oder Monophenylcarbamoyl und

Z und Y gleich oder verschieden sind und in Verbindung mit dem Brückenglied L unabhängig voneinander jeweils für einen Rest der Formel

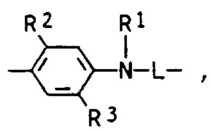

,

(IIa)

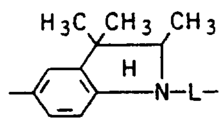

,

(IIb)

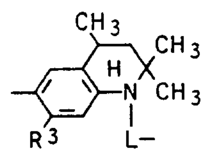

,

(IIc)

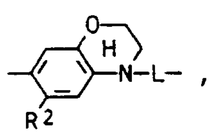

,

(IId)

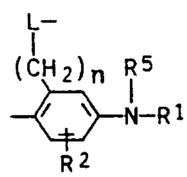

,

(IIe)

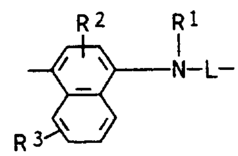

,

(IIf)

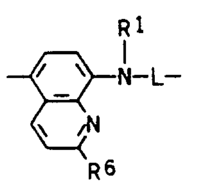

(IIg)

oder

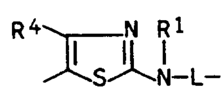

(IIh)

stehen, worin

n gleich 0 oder 1,

$R^1$ und $R^5$ gleich oder verschieden sind und unabhängig voneinander jeweils Alkyl, Alkoxyalkyl, Alkoxycarbonylalkyl oder Alkanoyloxyalkyl, wobei diese Reste jeweils bis zu 10 Kohlenstoffatome aufweisen und gegebenenfalls durch Hydroxy oder Cyano substituiert sein können, Wasserstoff, Benzyl, Cyclohexyl, Phenyl oder Tolyl,

$R^2$ und $R^3$ gleich oder verschieden sind und unabhängig voneinander jeweils Wasserstoff, $C_1$-$C_8$-Alkyl, $C_1$-$C_6$-Alkoxy, $C_1$-$C_6$-Alkanoylamino oder $C_1$-$C_6$-Alkylsulfonylamino,

$R^4$ Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl oder den Rest -NHR$^1$, wobei $R^1$ die obengenannte Bedeutung besitzt, und

$R^6$ Wasserstoff oder $C_1$-$C_8$-Alkyl

bedeuten.

2. Methinfarbstoffe gemäß Anspruch 1, dadurch gekennzeichnet, daß X Cyano bedeutet.

3. Verfahren zur Übertragung von bichromophoren Methinfarbstoffen von einem Träger auf ein mit Kunststoff beschichtetes Papier mit Hilfe einer Energiequelle, dadurch gekennzeichnet, daß man einen Träger verwendet, auf dem sich ein oder mehrere Farbstoffe der Formel I

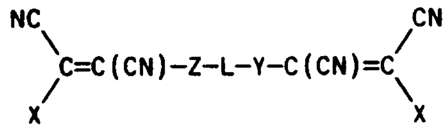
(I)

befinden, in der

L für ein Brückenglied, das keine Konjugation von $\pi$-Elektronen zwischen den Resten Z und Y zuläßt,

X gleich oder verschieden ist und jeweils für Cyano, $C_1$-$C_6$-Alkoxycarbonyl oder $C_1$-$C_6$-Monoalkylcarbamoyl, wobei die Alkylgruppen jeweils durch 1 oder 2 Sauerstoffatome unterbrochen sein können, $C_5$-$C_7$-Cycloalkoxycarbonyl, $C_5$-$C_7$-Monocycloalkylcarbamoyl, Phenoxycarbonyl oder Monophenylcarbamoyl und

Z und Y gleich oder verschieden sind und in Verbindung mit dem Brückenglied L unabhängig voneinander jeweils für einen Rest der Formel

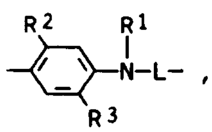
,
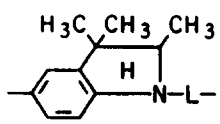
,
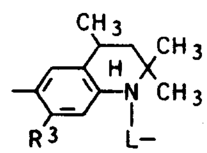
,

(IIa) (IIb) (IIc)

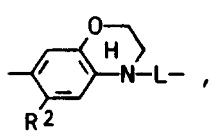
,
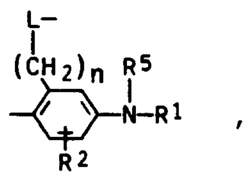
,
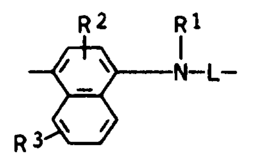
,

(IId) (IIe) (IIf)

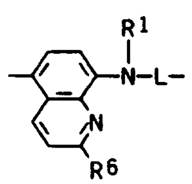
oder
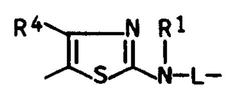

(IIg) (IIh)

stehen, worin

n gleich 0 oder 1,

$R^1$ und $R^5$ gleich oder verschieden sind und unabhängig voneinander jeweils Alkyl, Alkoxyalkyl, Alkoxycarbonylalkyl oder Alkanoyloxyalkyl, wobei diese Reste jeweils bis zu 10 Kohlenstoffatome aufweisen und gegebenenfalls durch Hydroxy oder Cyano substituiert sein können, Wasserstoff, Benzyl, Cyclohexyl, Phenyl oder Tolyl,

$R^2$ und $R^3$ gleich oder verschieden sind und unabhängig voneinander jeweils Wasserstoff, $C_1$-$C_8$-Alkyl, $C_1$-$C_6$-Alkoxy, $C_1$-$C_6$-Alkanoylamino oder $C_1$-$C_6$-Alkylsulfonylamino,

| | |
|---|---|
| $R^4$ | Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl oder den Rest -$NHR^1$, wobei $R^1$ die obengenannte Bedeutung besitzt, und |
| $R^6$ | Wasserstoff oder $C_1$-$C_8$-Alkyl |

bedeuten.

**Patentansprüche für folgende Vertragsstaaten : DE, FR, GB**

**1.** Methinfarbstoffe der Formel I

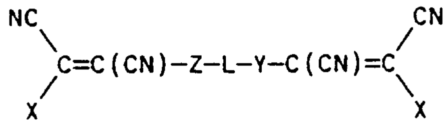 (I),

in der

| | |
|---|---|
| L | für ein Brückenglied, das keine Konjugation von $\pi$-Elektronen zwischen den Resten Z und Y zuläßt, |
| X | gleich oder verschieden ist und jeweils für Cyano, $C_1$-$C_6$-Alkoxycarbonyl oder $C_1$-$C_6$-Monoalkylcarbamoyl, wobei die Alkylgruppen jeweils durch 1 oder 2 Sauerstoffatome unterbrochen sein können, $C_5$-$C_7$-Cycloalkoxycarbonyl, $C_5$-$C_7$-Monocycloalkylcarbamoyl, Phenoxycarbonyl oder Monophenylcarbamoyl und |
| Z und Y | gleich oder verschieden sind und in Verbindung mit dem Brückenglied L unabhängig voneinander jeweils für einen Rest der Formel |

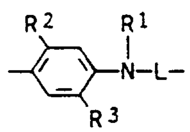 ,
(IIa)

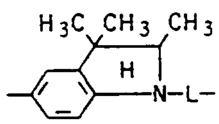 ,
(IIb)

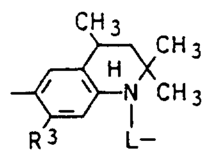 ,
(IIc)

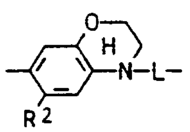 ,
(IId)

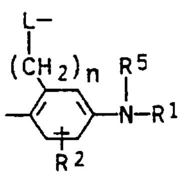 ,
(IIe)

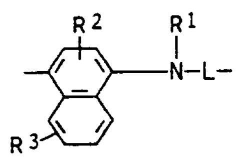 ,
(IIf)

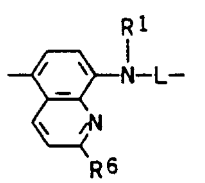 oder
(IIg)

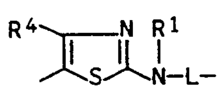
(IIh)

stehen, worin

| | |
|---|---|
| n | gleich 0 oder 1, |
| $R^1$ und $R^5$ | gleich oder verschieden sind und unabhängig voneinander jeweils Alkyl, Alkoxyalkyl, Alkoxycarbonylalkyl oder Alkanoyloxyalkyl, wobei diese Reste jeweils bis zu 10 Kohlenstoffatome aufweisen und gegebenenfalls durch Hydroxy oder Cyano substituiert sein können, Wasserstoff, Benzyl, Cyclohexyl, Phenyl oder Tolyl, |

$R^2$ und $R^3$ gleich oder verschieden sind und unabhängig voneinander jeweils Wasserstoff, $C_1$-$C_8$-Alkyl, $C_1$-$C_6$-Alkoxy, $C_1$-$C_6$-Alkanoylamino oder $C_1$-$C_6$-Alkylsulfonylamino,

$R^4$ Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl oder den Rest -$NHR^1$, wobei $R^1$ die obengenannte Bedeutung besitzt, und

$R^6$ Wasserstoff oder $C_1$-$C_8$-Alkyl

bedeuten, wobei folgende Verbindungen ausgenommen sind:

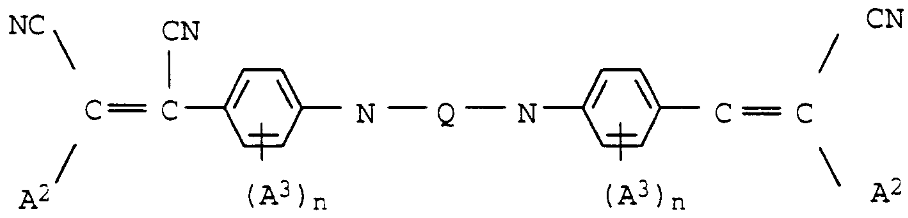

| $A^1$ | $A^2$ | $A^3$ | n | Q |
|---|---|---|---|---|
| $C_2H_4CN$ | CN | H | 1 | $C_3H_6$ |
| $C_2H_5$ | CN | $CH_3$ | 1 | $C_2H_4$ |
| $C_2H_4OH$ | CN | $CH_3$ | 1 | $C_8H_{16}$ |
| $CH_2C_6H_5$ | CN | H | 1 | $C_4H_8$ |
| $C_4H_9$ | CN | H | 1 | $C_2H_4OC_2H_4$ |
| $CH_3$ | CN | H | 1 | $C_2H_4OC_2H_4$ |
| $C_3H_7$ | CN | $NHCOCH_3$ | 1 | $C_2H_4CONHC_2H_4$ |
| $C_2H_5$ | $COOC_2H_5$ | H | 1 | $C_6H_4$ |
| $C_2H_5$ | $COOCH_3$ | $CH_3$ | 1 | $C_2H_4$ |
| $C_4H_9$ | $CONHC_4H_9$ | H | 1 | $C_2H_4$ |
| $C_2H_5$ | $CONHC_4H_9$ | $CH_3$ | 1 | $C_2H_4$ |
| $C_4H_9$ | CN | H | 1 | $C_5H_{10}$ |
| $C_4H_9$ | CN | $CH_3$ | 1 | $C_8H_{16}$ |
| $C_2H_5$ | CN | $OC_2H_5$ | 1 | $C_5H_{10}$ |

**2.** Methinfarbstoffe gemäß Anspruch 1, dadurch gekennzeichnet, daß X Cyano bedeutet.

**3.** Verfahren zur Übertragung von bichromophoren Methinfarbstoffen von einem Träger auf ein mit Kunststoff beschichtetes Papier mit Hilfe einer Energiequelle, dadurch gekennzeichnet, daß man einen Träger verwendet, auf dem sich ein oder mehrere Farbstoffe der Formel I

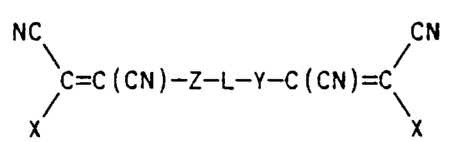

(I)

befinden, in der

L für ein Brückenglied, das keine Konjugation von $\pi$-Elektronen zwischen den Resten Z

und Y zuläßt,

X gleich oder verschieden ist und jeweils für Cyano, $C_1$-$C_6$-Alkoxycarbonyl oder $C_1$-$C_6$-Monoalkylcarbamoyl, wobei die Alkylgruppen jeweils durch 1 oder 2 Sauerstoffatome unterbrochen sein können, $C_5$-$C_7$-Cycloalkoxycarbonyl, $C_5$-$C_7$-Monocycloalkylcarbamoyl, Phenoxycarbonyl oder Monophenylcarbamoyl und

Z und Y gleich oder verschieden sind und in Verbindung mit dem Brückenglied L unabhängig voneinander jeweils für einen Rest der Formel

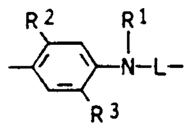 ,
(IIa)

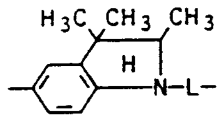 ,
(IIb)

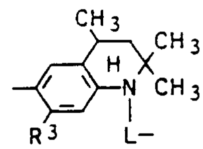 ,
(IIc)

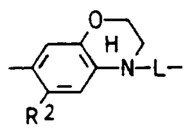 ,
(IId)

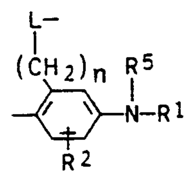 ,
(IIe)

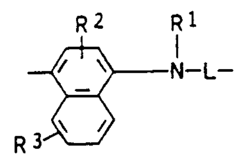 ,
(IIf)

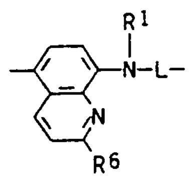 oder
(IIg)

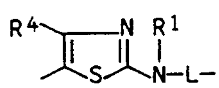
(IIh)

stehen, worin

n gleich 0 oder 1,

$R^1$ und $R^5$ gleich oder verschieden sind und unabhängig voneinander jeweils Alkyl, Alkoxyalkyl, Alkoxycarbonylalkyl oder Alkanoyloxyalkyl, wobei diese Reste jeweils bis zu 10 Kohlenstoffatome aufweisen und gegebenenfalls durch Hydroxy oder Cyano substituiert sein können, Wasserstoff, Benzyl, Cyclohexyl, Phenyl oder Tolyl,

$R^2$ und $R^3$ gleich oder verschieden sind und unabhängig voneinander jeweils Wasserstoff, $C_1$-$C_8$-Alkyl, $C_1$-$C_6$-Alkoxy, $C_1$-$C_6$-Alkanoylamino oder $C_1$-$C_6$-Alkylsulfonylamino,

$R^4$ Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Thienyl oder den Rest -NHR$^1$, wobei $R^1$ die obengenannte Bedeutung besitzt, und

$R^6$ Wasserstoff oder $C_1$-$C_8$-Alkyl

bedeuten, wobei die Übertragung der folgenden Farbstoffe ausgenommen ist:

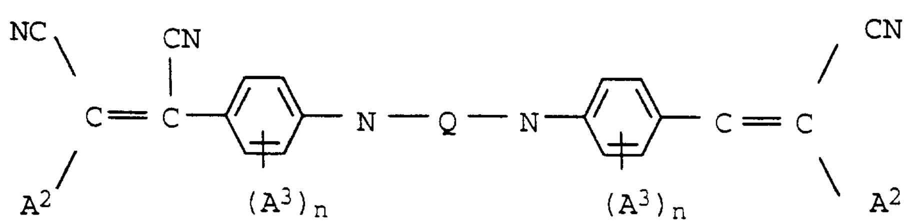

| $A^1$ | $A^2$ | $A^3$ | n | Q |
|---|---|---|---|---|
| $C_2H_4CN$ | CN | H | 1 | $C_3H_6$ |
| $C_2H_5$ | CN | $CH_3$ | 1 | $C_2H_4$ |
| $C_2H_4OH$ | CN | $CH_3$ | 1 | $C_8H_{16}$ |
| $CH_2C_6H_5$ | CN | H | 1 | $C_4H_8$ |
| $C_4H_9$ | CN | H | 1 | $C_2H_4OC_2H_4$ |
| $CH_3$ | CN | H | 1 | $C_2H_4OC_2H_4$ |
| $C_3H_7$ | CN | $NHCOCH_3$ | 1 | $C_2H_4CONHC_2H_4$ |
| $C_2H_5$ | $COOC_2H_5$ | H | 1 | $C_6H_4$ |
| $C_2H_5$ | $COOCH_3$ | $CH_3$ | 1 | $C_2H_4$ |
| $C_4H_9$ | $CONHC_4H_9$ | H | 1 | $C_2H_4$ |
| $C_2H_5$ | $CONHC_4H_9$ | $CH_3$ | 1 | $C_2H_4$ |
| $C_4H_9$ | CN | H | 1 | $C_5H_{10}$ |
| $C_4H_9$ | CN | $CH_3$ | 1 | $C_8H_{16}$ |
| $C_2H_5$ | CN | $OC_2H_5$ | 1 | $C_5H_{10}$ |

**Claims**

**Claims for the following Contracting States : CH, IT, LI**

**1.** A methine dye of the formula I

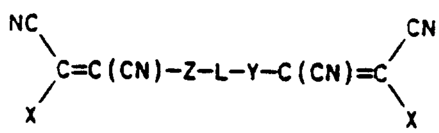

(I)

where

L is a bridge member which does not permit any conjugation of $\pi$-electrons between Z and Y,

X is identical or different in its two appearances, denoting in each case cyano, $C_1$-$C_6$-alkoxycarbonyl or $C_1$-$C_6$-monoalkylcarbamoyl, wherein alkyl may in each case be interrupted by 1 or 2 oxygen atoms, or $C_5$-$C_7$-cycloalkoxycarbonyl, $C_5$-$C_7$-monocycloalkylcarbamoyl, phenoxycarbonyl or monophenylcarbamoyl, and

Z and Y are identical or different and, together with the bridge member L, are each independently of the other a radical of the formula

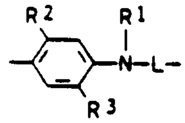 ,

(IIa)

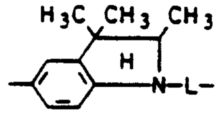 ,

(IIb)

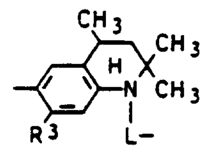 ,

(IIc)

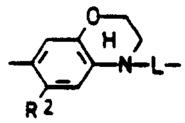 ,

(IId)

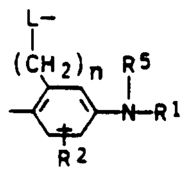 ,

(IIe)

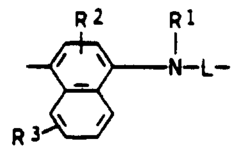 ,

(IIf)

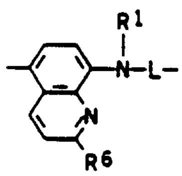

(IIg)

or

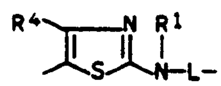

(IIh)

where

- n is 0 or 1,
- $R^1$ and $R^5$ are identical or different and each is independently of the other alkyl, alkoxyalkyl, alkoxycarbonylalkyl or alkanoyloxyalkyl, which may each have up to 10 carbon atoms and be hydroxyl- or cyano-substituted, hydrogen, benzyl, cyclohexyl, phenyl or tolyl,
- $R^2$ and $R^3$ are identical or different and each is independently of the other hydrogen, $C_1$-$C_8$-alkyl, $C_1$-$C_6$-alkoxy, $C_1$-$C_6$-alkanoylamino or $C_1$-$C_6$-alkylsulfonylamino,
- $R^4$ is hydrogen, halogen, $C_1$-$C_8$-alkyl, unsubstituted or $C_1$-$C_4$-alkyl- or $C_1$-$C_4$-alkoxy-substituted phenyl, unsubstituted or $C_1$-$C_4$-alkyl- or $C_1$-$C_4$-alkoxy-substituted benzyl, cyclohexyl, thienyl or $-NHR^1$, where $R^1$ is as defined above, and
- $R^6$ is hydrogen or $C_1$-$C_8$-alkyl.

**2.** A methine dye as claimed in claim 1, wherein X is cyano.

**3.** A process for transferring a bichromophoric methine dye from a transfer to a sheet of plastic-coated paper with the aid of an energy source, which comprises using a transfer on which there is or are one or more dyes of the formula I

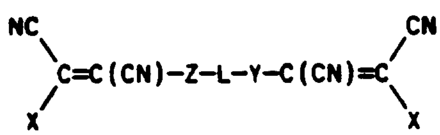

(I)

where

- L is a bridge member which does not permit any conjugation of $\pi$-electrons between Z and Y,
- X is identical or different in its two appearances, denoting in each case cyano, $C_1$-$C_6$-alkoxycarbonyl or $C_1$-$C_6$-monoalkylcarbamoyl, wherein alkyl may in each case be interrupted by 1 or 2 oxygen atoms, or $C_5$-$C_7$-cycloalkoxycarbonyl, $C_5$-$C_7$-monocycloalkylcarbamoyl, phenoxycarbonyl or monophenylcarbamoyl, and

Z and Y are identical or different and, together with the bridge member L, are each independently of the other a radical of the formula

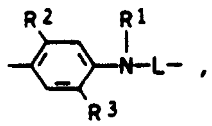

(IIa)

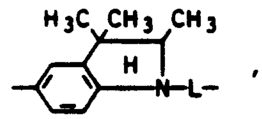

(IIb)

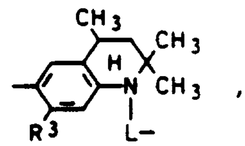

(IIc)

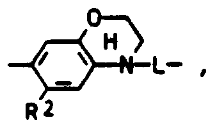

(IId)

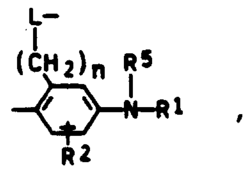

(IIe)

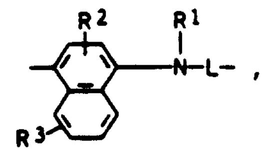

(IIf)

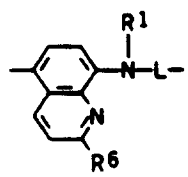

(IIg)

or

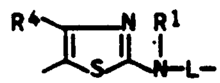

(IIh)

where

- n is 0 or 1,
- $R^1$ and $R^5$ are identical or different and each is independently of the other alkyl, alkoxyalkyl, alkoxycarbonylalkyl or alkanoyloxyalkyl, which may each have up to 10 carbon atoms and be hydroxyl- or cyano-substituted, hydrogen, benzyl, cyclohexyl, phenyl or tolyl,
- $R^2$ and $R^3$ are identical or different and each is independently of the other hydrogen, $C_1$-$C_8$-alkyl, $C_1$-$C_6$-alkoxy, $C_1$-$C_6$-alkanoylamino or $C_1$-$C_6$-alkylsulfonylamino,
- $R^4$ is hydrogen, halogen, $C_1$-$C_8$-alkyl, unsubstituted or $C_1$-$C_4$-alkyl- or $C_1$-$C_4$-alkoxy-substituted phenyl, unsubstituted or $C_1$-$C_4$-alkyl- or $C_1$-$C_4$-alkoxy-substituted benzyl, cyclohexyl, thienyl or -NHR$^1$, where $R^1$ is as defined above, and
- $R^6$ is hydrogen or $C_1$-$C_8$-alkyl.

**Claims for the following Contracting States : DE, FR, GB**

**1.** A methine dye of the formula I

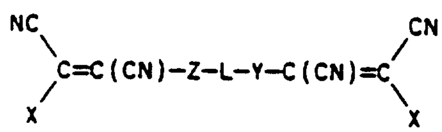

(I)

where

- L is a bridge member which does not permit any conjugation of $\pi$-electrons between Z and Y,
- X is identical or different in its two appearances, denoting in each case cyano, $C_1$-$C_6$-alkoxycarbonyl or $C_1$-$C_6$-monoalkylcarbamoyl, wherein alkyl may in each case be interrupted by 1 or 2 oxygen atoms, or $C_5$-$C_7$-cycloalkoxycarbonyl, $C_5$-$C_7$-monocycloalkylcarbamoyl, phenoxycarbonyl or monophenylcarbamoyl, and
- Z and Y are identical or different and, together with the bridge member L, are each independently of the other a radical of the formula

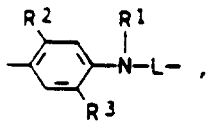

(IIa),

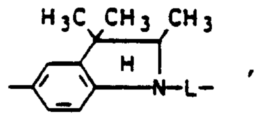

(IIb),

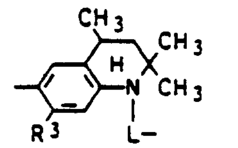

(IIc),

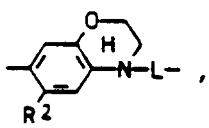

(IId),

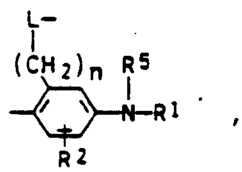

(IIe),

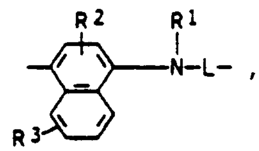

(IIf),

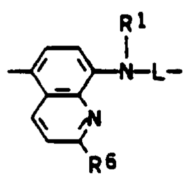

(IIg)

or

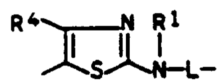

(IIh)

where

n is 0 or 1,

$R^1$ and $R^5$ are identical or different and each is independently of the other alkyl, alkoxyalkyl, alkoxycarbonylalkyl or alkanoyloxyalkyl, which may each have up to 10 carbon atoms and be hydroxyl- or cyano-substituted, hydrogen, benzyl, cyclohexyl, phenyl or tolyl,

$R^2$ and $R^3$ are identical or different and each is independently of the other hydrogen, $C_1$-$C_8$-alkyl, $C_1$-$C_6$-alkoxy, $C_1$-$C_6$-alkanoylamino or $C_1$-$C_6$-alkylsulfonylamino,

$R^4$ is hydrogen, halogen, $C_1$-$C_8$-alkyl, unsubstituted or $C_1$-$C_4$-alkyl- or $C_1$-$C_4$-alkoxy-substituted phenyl, unsubstituted or $C_1$-$C_4$-alkyl- or $C_1$-$C_4$-alkoxy-substituted benzyl, cyclohexyl, thienyl or $-NHR^1$, where $R^1$ is as defined above, and

$R^6$ is hydrogen or $C_1$-$C_8$-alkyl,

with the exception of the following compounds:

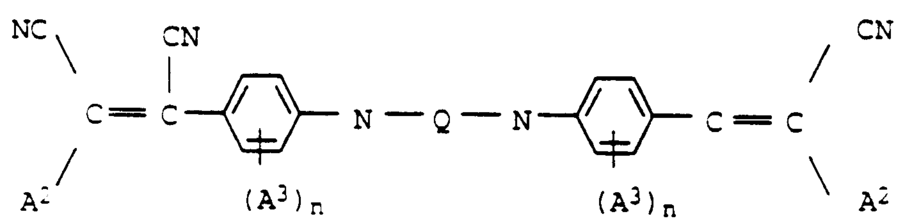

| $A^1$ | $A^2$ | $A^3$ | n | Q |
|---|---|---|---|---|
| $C_2H_4CN$ | CN | H | 1 | $C_3H_6$ |
| $C_2H_5$ | CN | $CH_3$ | 1 | $C_2H_4$ |
| $C_2H_4OH$ | CN | $CH_3$ | 1 | $C_8H_{16}$ |
| $CH_2C_6H_5$ | CN | H | 1 | $C_4H_8$ |
| $C_4H_9$ | CN | H | 1 | $C_2H_4OC_2H_4$ |
| $CH_3$ | CN | H | 1 | $C_2H_4OC_2H_4$ |
| $C_3H$- | CN | $NHCOCH_3$ | 1 | $C_2H_4CONHC_2H_4$ |
| $C_2H_5$ | $COOC_2H_5$ | H | 1 | $C_6H_4$ |
| $C_2H_5$ | $COOCH_3$ | $CH_3$ | 1 | $C_2H_4$ |
| $C_4H_9$ | $CONHC_4H_9$ | H | 1 | $C_2H_4$ |
| $C_2H_5$ | $CONHC_4H_9$ | $CH_3$ | 1 | $C_2H_4$ |
| $C_4H_9$ | CN | H | 1 | $C_5H_{10}$ |
| $C_4H_9$ | CN | $CH_3$ | 1 | $C_8H_{16}$ |
| $C_2H_5$ | CN | $OC_2H_5$ | 1 | $C_5H_{10}$ |

**2.** A methine dye as claimed in claim 1, wherein X is cyano.

**3.** A process for transferring a bichromophoric methine dye from a transfer to a sheet of plastic-coated paper with the aid of an energy source, which comprises using a transfer on which there is or are one or more dyes of the formula I

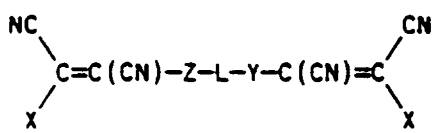

(I)

where

- L is a bridge member which does not permit any conjugation of π-electrons between Z and Y,
- X is identical or different in its two appearances, denoting in each case cyano, $C_1$-$C_6$-alkoxycarbonyl or $C_1$-$C_6$-monoalkylcarbamoyl, wherein alkyl may in each case be interrupted by 1 or 2 oxygen atoms, or $C_5$-$C_7$-cycloalkoxycarbonyl, $C_5$-$C_7$-monocycloalkylcarbamoyl, phenoxycarbonyl or monophenylcarbamoyl, and
- Z and Y are identical or different and, together with the bridge member L, are each independently of the other a radical of the formula

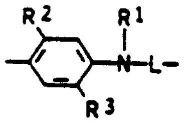 ,

(IIa)

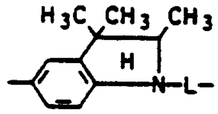 ,

(IIb)

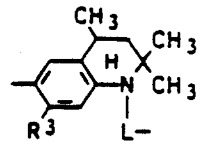 ,

(IIc)

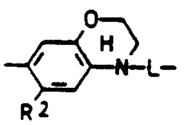 ,

(IId)

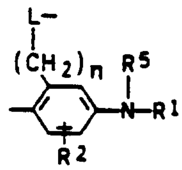 ,

(IIe)

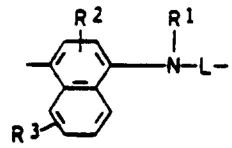 ,

(IIf)

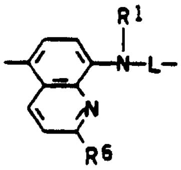

(IIg)

or

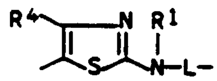

(IIh)

where

- n is 0 or 1,
- $R^1$ and $R^5$ are identical or different and each is independently of the other alkyl, alkoxyalkyl, alkoxycarbonylalkyl or alkanoyloxyalkyl, which may each have up to 10 carbon atoms and be hydroxyl- or cyano-substituted, hydrogen, benzyl, cyclohexyl, phenyl or tolyl,
- $R^2$ and $R^3$ are identical or different and each is independently of the other hydrogen, $C_1$-$C_8$-alkyl, $C_1$-$C_6$-alkoxy, $C_1$-$C_6$-alkanoylamino or $C_1$-$C_6$-alkylsulfonylamino,
- $R^4$ is hydrogen, halogen, $C_1$-$C_8$-alkyl, unsubstituted or $C_1$-$C_4$-alkyl- or $C_1$-$C_4$-alkoxy-substituted phenyl, unsubstituted or $C_1$-$C_4$-alkyl or $C_1$-$C_4$-alkoxy-substituted benzyl, cyclohexyl, thienyl or -$NHR^1$, where $R^1$ is as defined above, and
- $R^6$ is hydrogen or $C_1$-$C_8$-alkyl,

the transfer of the following dyes being excluded:

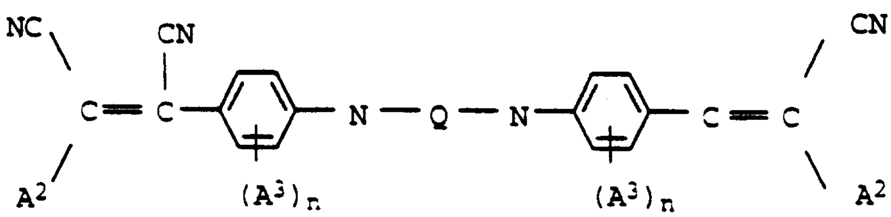

| $A^1$ | $A^2$ | $A^3$ | n | Q |
|---|---|---|---|---|
| $C_2H_4CN$ | CN | H | 1 | $C_3H_6$ |
| $C_2H_5$ | CN | $CH_3$ | 1 | $C_2H_4$ |
| $C_2H_4OH$ | CN | $CH_3$ | 1 | $C_8H_{16}$ |
| $CH_2C_6H_5$ | CN | H | 1 | $C_4H_8$ |
| $C_4H_9$ | CN | H | 1 | $C_2H_4OC_2H_4$ |
| $CH_3$ | CN | H | 1 | $C_2H_4OC_2H_4$ |
| $C_3H_7$ | CN | $NHCOCH_3$ | 1 | $C_2H_4CONHC_2H_4$ |
| $C_2H_5$ | $COOC_2H_5$ | H | 1 | $C_6H_4$ |
| $C_2H_5$ | $COOCH_3$ | $CH_3$ | 1 | $C_2H_4$ |
| $C_4H_9$ | $CONHC_4H_9$ | H | 1 | $C_2H_4$ |
| $C_2H_5$ | $CONHC_4H_9$ | $CH_3$ | 1 | $C_2H_4$ |
| $C_4H_9$ | CN | H | 1 | $C_5H_{10}$ |
| $C_4H_9$ | CN | $CH_3$ | 1 | $C_8H_{16}$ |
| $C_2H_5$ | CN | $OC_2H_5$ | 1 | $C_5H_{10}$ |

**Revendications**
**Revendications pour les Etats contractants suivants : CH, LI, IT**

**1.** Colorants méthiniques de formule I

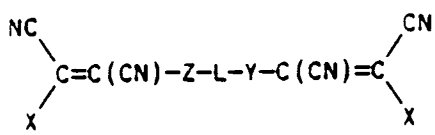

(I),

dans laquelle

- L est mis pour un groupe pontant, qui ne présente pas de conjugaison d'électrons $\pi$ entre les restes Z et Y,
- X représente des groupes identiques ou différents et est mis chaque fois pour un groupe cyano, (alcoxy en $C_1$-$C_6$)carbonyle ou mono(alkyle en $C_1$-$C_6$)carbamoyle, les groupes alkyle pouvant chaque fois être interrompus par 1 ou 2 atomes d'oxygène, ou pour un groupe (cycloalcoxy en $C_5$-$C_7$)carbonyle, mono(cycloalkyle en $C_5$-$C_7$)carbamoyle, phénoxycarbonyle ou monophénylcarbamoyle et
- Z et Y sont identiques ou différents et sont mis chacun indépendamment l'un de l'autre, en liaison avec le groupe pontant L, pour un reste de formules

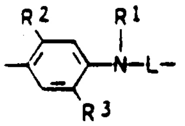 ,
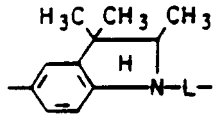 ,
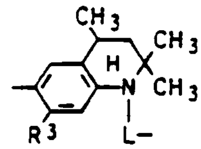 ,

(IIa) (IIb) (IIc)

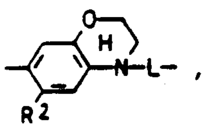 ,
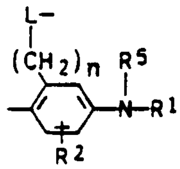 ,
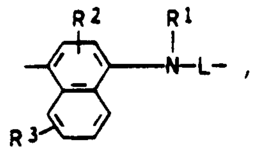 ,

(IId) (IIe) (IIf)

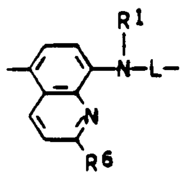 ou 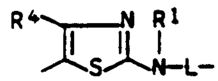 .

(IIg) (IIh)

dans lesquelles

n est 0 ou 1,

$R^1$ et $R^5$ sont identiques ou différents et représentent chacun indépendamment l'un de l'autre un groupe alkyle, alcoxyalkyle, alcoxycarbonylalkyle ou alcanoyloxyalkyle, ces restes présentant chacun jusqu'à 10 atomes de carbone et pouvant être éventuellement substitués par un groupe hydroxy ou cyano, ou représentent un atome d'hydrogène, un groupe benzyle, cyclohexyle, phényle ou tolyle,

$F^2$ et $R^3$ sont identiques ou différents et représentent chacun indépendamment l'un de l'autre un atome d'hydrogène, un groupe alkyle en $C_1$-$C_8$, alcoxy en $C_1$-$C_6$, alcanoylamino en $C_1$-$C_6$ ou alkylsulfonylamino en $C_1$-$C_5$.

$R^4$ représente un atome d'hydrogène, d'halogène, un groupe alkyle en $C_1$-$C_8$, phényle éventuellement substitué par un groupe alkyle en $C_1$-$C_4$ ou alcoxy en $C_1$-$C_4$, benzyle éventuellement substitué par un groupe alkyle en $C_1$-$C_4$ ou alcoxy en $C_1$-$C_4$, ou représente un groupe cyclohexyle, thiényle ou le reste -$NHR^1$, dans lequel $R^1$ a la signification mentionnée ci-dessus, et

$R^6$ représente un atome d'hydrogène ou un groupe alkyle en $C_1$-$C_8$.

**2.** Colorants méthiniques selon la revendication 1, caractérisés en ce que X représente un groupe cyano.

**3.** Procédé de transfert de colorants méthiniques bichromophores d'un support sur un papier revêtu de matière synthétique au moyen d'une source d'énergie, caractérisé en ce que l'on utilise un support, sur lequel se trouvent un ou plusieurs colorants de formule I

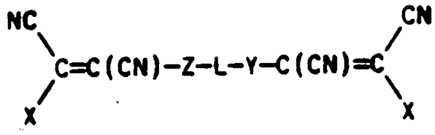 (I)

dans laquelle

L est mis pour un groupe pontant, qui ne présente pas de conjugaison d'électrons $\pi$ entre les restes Z et Y,

X représente des groupes identiques ou différents et est mis chaque fois pour un groupe cyano, (alcoxy en $C_1$-$C_6$)carbonyle ou mono(alkyle en $C_1$-$C_6$)carbamoyle, les groupes alkyle pouvant chaque fois être interrompus par 1 ou 2 atomes d'oxygène, ou pour un groupe (cycloalcoxy en $C_5$-$C_7$)carbonyle, mono(cycloalkyle en $C_5$-$C_7$)carbamoyle, phénoxycarbonyle au monophénylcarbamoyle et

Z et Y sont identiques ou différents et sont mis chacun indépendamment l'un de l'autre, en liaison avec le groupe pontant L, pour un reste de formules

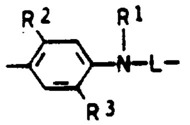 ,

(IIa)

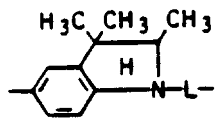 ,

(IIb)

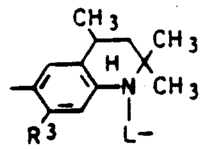 ,

(IIc)

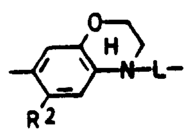 ,

(IId)

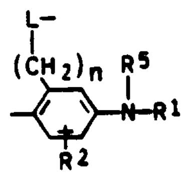 ,

(IIe)

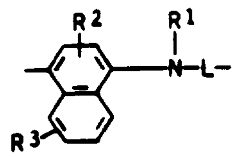 ,

(IIf)

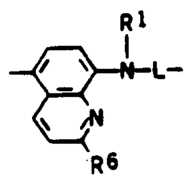

(IIg)

ou

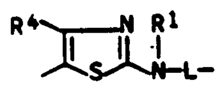

(IIh)

dans lesquelles

n est 0 ou 1,

$R^1$ et $R^5$ sont identiques ou différents et représentent chacun indépendamment l'un de l'autre un groupe alkyle, alcoxyalkyle, alcoxycarbonylalkyle ou alcanoyloxyalkyle, ces restes présentant chacun jusqu'à 10 atomes de carbone et pouvant être éventuellement substitués par un groupe hydroxy ou cyano, ou représentent un atome d'hydrogène, un groupe benzyle, cyclohexyle, phényle ou tolyle,

$R^2$ et $R^3$ sont identiques ou différents et représentent chacun indépendamment l'un de l'autre un atome d'hydrogène, un groupe alkyle en $C_1$-$C_8$, alcoxy en $C_1$-$C_6$, alcanoylamino en $C_1$-$C_6$ ou alkylsulfonylamino en $C_1$-$C_6$,

$R^4$ représente un atome d'hydrogène, d'halogène, un groupe alkyle en $C_1$-$C_8$, phényle éventuellement substitué par un groupe alkyle en $C_1$-$C_4$ ou alcoxy en $C_1$-$C_4$, benzyle éventuellement substitué par un groupe alkyle en $C_1$-$C_4$ ou alcoxy en $C_1$-$C_4$, ou représente un groupe cyclohexyle, thiényle ou le reste $-NHR^1$, dans lequel $R^1$ a la signification mentionnée ci-dessus, et

$R^6$ représente un atome d'hydrogène ou un groupe alkyle en $C_1$-$C_8$.

**Revendications pour les Etats contractants suivants : DE, FR, GB**

**1.** Colorants méthiniques de formule I

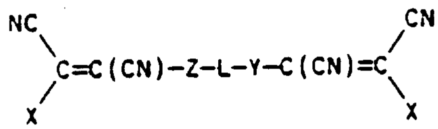

(I),

dans laquelle

- L — est mis pour un groupe pontant, qui ne présente pas de conjugaison d'électrons $\pi$ entre les restes Z et Y,
- X — représente des groupes identiques ou différents et est mis chaque fois pour un groupe cyano, (alcoxy en $C_1$-$C_6$)carbonyle ou mono(alkyle en $C_1$-$C_6$)carbamoyle, les groupes alkyle pouvant chaque fois être interrompus par 1 ou 2 atomes d'oxygène, ou pour un groupe (cycloalcoxy en $C_5$-$C_7$)carbonyle, mono(cycloalkyle en $C_5$-$C_7$)carbamoyle, phénoxycarbonyle ou monophénylcarbamoyle et
- Z et Y — sont identiques ou différents et sont mis chacun indépendamment l'un de l'autre, en liaison avec le groupe pontant L, pour un reste de formules

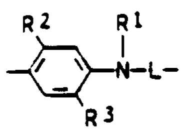 ,
(IIa)

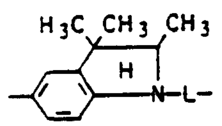 ,
(IIb)

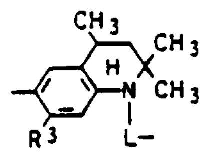 ,
(IIc)

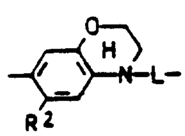 ,
(IId)

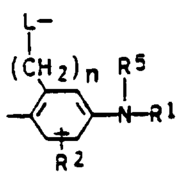 ,
(IIe)

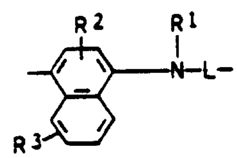 ,
(IIf)

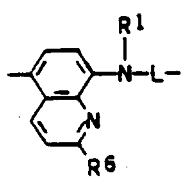
(IIg)

ou

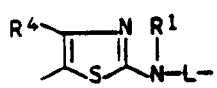
(IIh)

dans lesquelles

- n — est 0 ou 1,
- $R^1$ et $R^5$ — sont identiques ou différents et représentent chacun indépendamment l'un de l'autre un groupe alkyle, alcoxyalkyle, alcoxycarbonylalkyle ou alcanoyloxyalkyle, ces restes présentant chacun jusqu'à 10 atomes de carbone et pouvant être éventuellement substitués par un groupe hydroxy ou cyano, ou représentent un atome d'hydrogène, un groupe benzyle, cyclohexyle, phényle ou tolyle,
- $R^2$ et $R^3$ — sont identiques ou différents et représentent chacun indépendamment l'un de l'autre un atome d'hydrogène, un groupe alkyle en $C_1$-$C_8$, alcoxy en $C_1$-$C_6$, alcanoylamino en $C_1$-$C_6$ ou alkylsulfonylamino en $C_1$-$C_6$,
- $R^4$ — représente un atome d'hydrogène, d'halogène, un groupe alkyle en $C_1$-$C_8$, phényle éventuellement substitué par un groupe alkyle en $C_1$-$C_4$ au par un groupe alcoxy en

$C_1$-$C_4$, benzyle éventuellement substitué par un groupe alkyle en $C_1$-$C_4$ ou alcoxy en $C_1$-$C_4$, ou représente un groupe cyclohexyle, thiényle ou le reste -$NHR^1$, $R^1$ ayant la signification mentionnée ci-dessus, et

$R^6$ représente un atome d'hydrogène ou un groupe alkyle en $C_1$-$C_8$,

les composés suivants étant exclus :

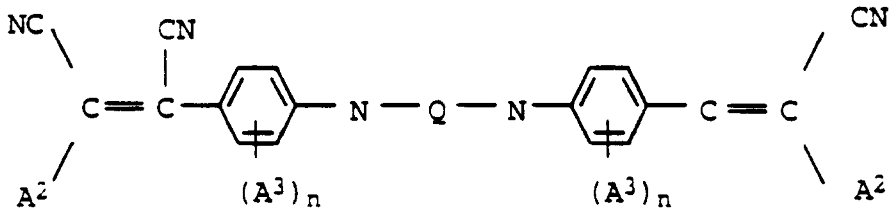

| $A^1$ | $A^2$ | $A^3$ | n | Q |
|---|---|---|---|---|
| $C_2H_4CN$ | CN | H | 1 | $C_3H_6$ |
| $C_2H_5$ | CN | $CH_3$ | 1 | $C_2H_4$ |
| $C_2H_4OH$ | CN | $CH_3$ | 1 | $C_8H_{16}$ |
| $CH_2C_6H_5$ | CN | H | 1 | $C_4H_8$ |
| $C_4H_9$ | CN | H | 1 | $C_2H_4OC_2H_4$ |
| $CH_3$ | CN | H | 1 | $C_2H_4OC_2H_4$ |
| $C_3H_7$ | CN | $NHCOCH_3$ | 1 | $C_2H_4CONHC_2H_4$ |
| $C_2H_5$ | $COOC_2H_5$ | H | 1 | $C_6H_4$ |
| $C_2H_5$ | $COOCH_3$ | $CH_3$ | 1 | $C_2H_4$ |
| $C_4H_9$ | $CONHC_4H_9$ | H | 1 | $C_2H_4$ |
| $C_2H_5$ | $CONHC_4H_9$ | $CH_3$ | 1 | $C_2H_4$ |
| $C_4H_9$ | CN | H | 1 | $C_5H_{10}$ |
| $C_4H_9$ | CN | $CH_3$ | 1 | $C_8H_{16}$ |
| $C_2H_5$ | CN | $OC_2H_5$ | 1 | $C_5H_{10}$ |

**2.** Colorants méthiniques selon la revendication 1 caractérisés en ce que X représente un groupe cyano.

**3.** Procédé de transfert de colorants méthiniques bichromophores d'un support sur un papier revêtu de matière synthétique, au moyen d'une source d'énergie, caractérisé en ce que l'on utilise un support sur lequel se trouvent un ou plusieurs colorants de formule I

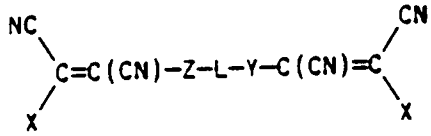

(I)

dans laquelle

L est mis pour un groupe pontant, qui ne présente pas de conjugaison d'électrons $\pi$ entre les restes Z et Y,

X représente des groupes identiques ou différents et est mis chaque fois pour un groupe

cyano, (alcoxy en $C_1$-$C_6$)carbonyle ou mono(alkyle en $C_1$-$C_6$)carbamoyle, les groupes alkyle pouvant chaque fois être interrompus par 1 ou 2 atomes d'oxygène, ou pour un groupe (cycloalcoxy en $C_6$-$C_7$)carbonyle, mono(cycloalkyle en $C_6$-$C_7$)carbamoyle, phénoxycarbonyle ou monophénylcarbamoyle et

Z et Y sont identiques ou différents et sont mis chacun indépendamment l'un de l'autre, en liaison avec le groupe pontant L, pour un reste de formules

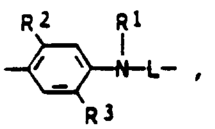 ,
(IIa)

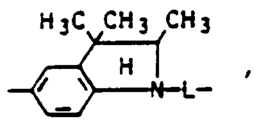 ,
(IIb)

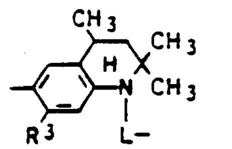 ,
(IIc)

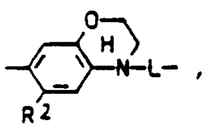 ,
(IId)

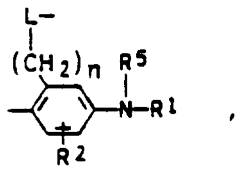 ,
(IIe)

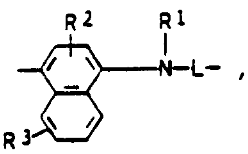 ,
(IIf)

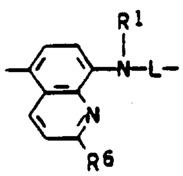
(IIg)

ou

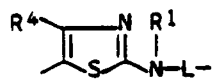
(IIh)

dans lesquelles

n est 0 ou 1,

$R^1$ et $R^5$ sont identiques ou différents et représentent chacun indépendamment l'un de l'autre un groupe alkyle, alcoxyalkyle, alcoxycarbonylalkyle ou alcanoyloxyalkyle, ces restes présentant chacun jusqu'à 10 atomes de carbone et pouvant être éventuellement substitués par un groupe hydroxy ou cyano, ou représentent un atome d'hydrogène, un groupe benzyle, cyclohexyle, phényle ou tolyle,

$R^2$ et $R^3$ sont identiques ou différents et représentent chacun indépendamment l'un de l'autre un atome d'hydrogène, un groupe alkyle en $C_1$-$C_8$, alcoxy en $C_1$-$C_6$, alcanoylamino en $C_1$-$C_6$ ou alkylsulfonylamino en $C_1$-$C_6$,

$R^4$ représente un atome d'hydrogène, d'halogène, un groupe alkyle en $C_1$-$C_8$, phényle éventuellement substitué par un groupe alkyle en $C_1$-$C_4$ ou alcoxy en $C_1$-$C_4$, benzyle éventuellement substitué par un groupe alkyle en $C_1$-$C_4$ ou alcoxy en $C_1$-$C_4$, ou représente un groupe cyclohexyle, thiényle ou le reste -$NHR^1$, dans lequel $R^1$ a la signification mentionnée ci-dessus, et

$R^6$ représente un atome d'hydrogène ou un groupe alkyle en $C_1$-$C_8$,

le transfert des colorants suivants étant exclu :

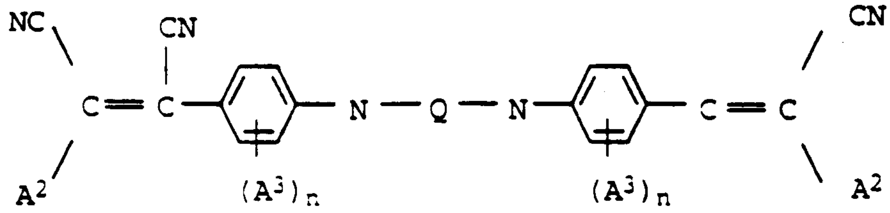

| $A^1$ | $A^2$ | $A^3$ | n | Q |
|---|---|---|---|---|
| $C_2H_4CN$ | CN | H | 1 | $C_3H_6$ |
| $C_2H_5$ | CN | $CH_3$ | 1 | $C_2H_4$ |
| $C_2H_4OH$ | CN | $CH_3$ | 1 | $C_8H_{16}$ |
| $CH_3C_6H_5$ | CN | H | 1 | $C_4H_8$ |
| $C_4H_9$ | CN | H | 1 | $C_2H_4OC_2H_4$ |
| $CH_3$ | CN | H | 1 | $C_2H_4OC_2H_4$ |
| $C_3H_7$ | CN | $NHCOCH_3$ | 1 | $C_2H_4CONHC_2H_4$ |
| $C_2H_5$ | $COOC_2H_5$ | H | 1 | $C_6H_4$ |
| $C_2H_5$ | $COOCH_3$ | $CH_3$ | 1 | $C_2H_4$ |
| $C_4H_9$ | $CONHC_4H_9$ | H | 1 | $C_2H_4$ |
| $C_2H_5$ | $CONHC_4H_9$ | $CH_3$ | 1 | $C_2H_4$ |
| $C_4H_9$ | CN | H | 1 | $C_5H_{10}$ |
| $C_4H_9$ | CN | $CH_3$ | 1 | $C_8H_{16}$ |
| $C_2H_5$ | CN | $OC_2H_5$ | 1 | $C_5H_{10}$ |